(19) Europäisches Patentamt
European Patent Office
Office européen des brevets

(11) **EP 4 283 886 A1**

(12) **EUROPEAN PATENT APPLICATION**
published in accordance with Art. 153(4) EPC

(43) Date of publication:
**29.11.2023 Bulletin 2023/48**

(21) Application number: **21921294.1**

(22) Date of filing: **16.12.2021**

(51) International Patent Classification (IPC):
**H04B 10/2507** (2013.01)    **G02B 6/036** (2006.01)

(52) Cooperative Patent Classification (CPC):
**G02B 6/036; H04B 10/2507**

(86) International application number:
**PCT/JP2021/046618**

(87) International publication number:
**WO 2022/158192 (28.07.2022 Gazette 2022/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.01.2021 JP 2021009099**

(71) Applicant: **Sony Group Corporation**
**Tokyo 108-0075 (JP)**

(72) Inventors:
• **MORITA, Hiroshi**
  **Tokyo 108-0075 (JP)**
• **OYAMA, Yusuke**
  **Tokyo 108-0075 (JP)**
• **TOBA, Kazuaki**
  **Tokyo 108-0075 (JP)**
• **YAMAMOTO, Masanari**
  **Tokyo 108-0075 (JP)**

(74) Representative: **2SPL Patentanwälte PartG mbB**
**Landaubogen 3**
**81373 München (DE)**

(54) **OPTICAL WAVEGUIDE, OPTICAL COMMUNICATION DEVICE, OPTICAL COMMUNICATION METHOD, AND OPTICAL COMMUNICATION SYSTEM**

(57)  To mitigate the accuracy of misalignment to reduce costs, and to suppress an inter-mode propagation delay difference to enable high-quality transmission of signals.

An optical waveguide is configured to propagate only a fundamental mode at a first wavelength and propagate at least a first-order mode as well as the fundamental mode at a second wavelength. The optical waveguide is configured such that a refractive index distribution of a core and a cladding is controlled so that the inter-mode propagation delay difference is within a predetermined threshold, for example, the inter-mode propagation delay difference is zero, when communication is performed using light of the second wavelength. For example, the first wavelength is in a 1310-nm band and the second wavelength is in an 850-nm band.

Fig. 13

EP 4 283 886 A1

**Description**

[Technical Field]

The present technology relates to an optical waveguide, an optical communication device, an optical communication method, and an optical communication system, and more particularly, to an optical waveguide and the like suitable for use to reduce the accuracy of misalignment.

[Background Art]

Conventionally, optical communication using spatial coupling (see, for example, PTL 1) is known. In the case of such optical communication, especially in a single-mode fiber, a large optical power loss occurs due to misalignment. For this reason, conventionally, high precision is required for parts in order to suppress misalignment, leading to an increase in cost.

[Citation List]

[Patent Literature]

[PTL 1]
WO 2017/056889

[Summary]

[Technical Problem]

An object of the present technology is to mitigate the accuracy of misalignment to reduce costs, and to suppress the inter-mode propagation delay difference to enable high-quality transmission of signals.

[Solution to Problem]

A concept of the present technology is an optical waveguide configured to: propagate only a fundamental mode at a first wavelength; propagate at least a first-order mode as well as the fundamental mode at a second wavelength; and a refractive index distribution of a core and a cladding is controlled so that an inter-mode propagation delay difference is within a predetermined threshold when communication is performed using light of the second wavelength.

The optical waveguide of the present technology is configured to propagate only the fundamental mode at a first wavelength and propagate at least the first-order mode as well as the fundamental mode at a second wavelength. In the optical waveguide according to the present technology, the refractive index distribution of the core and the cladding is controlled so that the inter-mode propagation delay difference is within a predetermined threshold when communication is performed using light of the second wavelength.

For example, the first wavelength may be a wavelength at which chromatic dispersion is zero. Also, for example, the first wavelength may be between 300 nm and 5 $\mu$m. In this case, for example, the first wavelength may be a wavelength in the 1310-nm band or the 1550-nm band. Also, for example, the second wavelength may be a wavelength in the 850-nm band.

Thus, in the present technology, the optical waveguide propagates only the fundamental mode at the first wavelength, and propagates at least the first-order mode as well as the fundamental mode at the second wavelength. When communication is performed using light of the second wavelength, since at least the first-order mode component generated due to optical axis misalignment propagates together with the fundamental mode component, it is possible to reduce the coupling loss of optical power due to optical axis misalignment. In addition, in the present technology, the optical fiber is configured such that the refractive index distribution of the core and the cladding is controlled so that the inter-mode propagation delay difference is within a predetermined threshold when communication is performed using the light of the second wavelength. Thus, it is possible to keep the inter-mode propagation delay difference within a predetermined threshold when communication is performed using light of the second wavelength. Further, high-quality signal transmission can be realized without increasing the cost and power consumption due to the provision of a waveform distortion correction circuit.

In addition, in the present technology, for example, the refractive index distribution may include a distribution of refractive indices of a first region from a center to a first diameter, a second region to a second diameter outside the first region, a third region to a third diameter outside the second region, and a fourth region outside the third region.

In this case, for example, the refractive index of the third region may be higher than that of the fourth region, the refractive index of the second region may be equal to that of the fourth region, and the refractive index of the first region may be higher than that of the third region. The refractive index distribution of this case is a so-called segmented-core type distribution.

In the segmented-core refractive index distribution, for example, the first wavelength may be in a 1310-nm band and the second wavelength may be in an 850-nm band, the first diameter may be 7 pm, the second diameter may be 9 pm, the third diameter may be 11 pm, the refractive index of the fourth region may be 1.4524, a refractive index change amount of the third region with respect to the refractive index of the fourth region may be in a range of 0 to +0.0024, and the refractive index change amount of the first region with respect to the refractive index of the fourth region may be in a range of +0.00467 to +0.00541. In this case, for example, a refractive index change amount of the third region with respect to the refractive index of the fourth region may be +0.000827, and a refractive index change amount of the first region with respect to the refractive index of the fourth region may be +0.004882.

Also, in this case, for example, the refractive index of the third region may be equal to that of the fourth region, the refractive index of the second region may be higher than that of the fourth region, and the refractive index of the first region may be higher than that of the second region. The refractive index distribution of this case is a so-called stepped-type distribution.

In the stepped refractive index distribution, for example, the first wavelength may be in a 1310-nm band and the second wavelength may be in an 850-nm band, the first diameter may be 7 pm and the second diameter may be 13 pm, the refractive index of the fourth region may be 1.4524, a refractive index change amount of the second region with respect to the refractive index of the fourth region may be in a range of 0 to +0.0012, and a refractive index change amount of the first region with respect to the refractive index of the fourth region may be in a range of +0.00467 to +0.00526. In this case, a refractive index change amount of the second region with respect to the refractive index of the fourth region may be +0.000811, and a refractive index change amount of the first region with respect to the refractive index of the fourth region may be +0.005053.

Also, in this case, for example, the refractive index of the third region may be equal to that of the fourth region, the refractive index of the second region may be lower than that of the fourth region, and the refractive index of the first region may be higher than that of the fourth region. The refractive index distribution of this case is a so-called W-type distribution.

In the W-type refractive index distribution, for example, the first wavelength may be in a 1310-nm band and the second wavelength may be in an 850-nm band, the first diameter is 7 pm and the second diameter may be 9 pm, the refractive index of the fourth region may be 1.4524, a refractive index change amount of the first region with respect to the refractive index of the fourth region may be in a range of -0.0055 to 0, and a refractive index change amount of the first region with respect to the refractive index of the fourth region may be in a range of +0.00486 to +0.00467. In this case, a refractive index change amount of the first region with respect to the refractive index of the fourth region may be -0.002245, and a refractive index change amount of the first region with respect to the refractive index of the fourth region may be +0.004778.

Also, in this case, for example, the refractive indices of the third region and the second region may be equal to that of the fourth region, and the refractive index of the first region may be higher than that of the fourth region. The refractive index distribution of this case is a so-called SI (step index)-type distribution. In the SI-type refractive index distribution, for example, the first wavelength may be in a 1310-nm band and the second wavelength may be in an 850-nm band, the first diameter may be 7 pm, the refractive index of the fourth region may be 1.4524, and a refractive index change amount of the first region with respect to the refractive index of the fourth region may be +0.00467.

Additionally, another concept of the present technology is an optical communication device comprising: an optical waveguide configured to propagate only a fundamental mode at a first wavelength and propagate at least a first-order mode as well as the fundamental mode at a second wavelength, the optical waveguide is configured such that a refractive index distribution of a core and a cladding is controlled so that an inter-mode propagation delay difference is within a predetermined threshold when communication is performed using light of the second wavelength, and the optical communication device performs communication using light of the second wavelength.

Additionally, another concept of the present technology is an optical communication method for performing communication using light of a second wavelength in an optical waveguide configured to propagate only a fundamental mode at a first wavelength and propagate at least a first-order mode as well as the fundamental mode at the second wavelength and configured such that a refractive index distribution of a core and a cladding is controlled so that an inter-mode propagation delay difference is within a predetermined threshold when communication is performed using light of the second wavelength.

Additionally, another concept of the present technology is an optical communication system in which a transmitter and a receiver are connected by an optical waveguide, wherein the optical waveguide is configured to propagate only a fundamental mode at a first wavelength and propagate at least a first-order mode as well as the fundamental mode at a second wavelength and configured such that a refractive index distribution of a core and a cladding is controlled so that an inter-mode propagation delay difference is within a predetermined threshold when communication is performed using light of the second wavelength, and the transmitter and the receiver perform communication using light of the second wavelength in the optical waveguide.

[Brief Description of Drawings]

[Fig. 1]

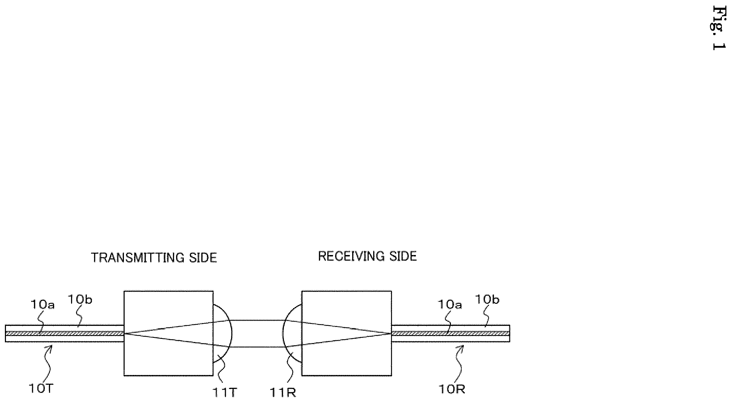

Fig. 1 is a diagram showing an outline of optical communication using spatial coupling.
[Fig. 2]

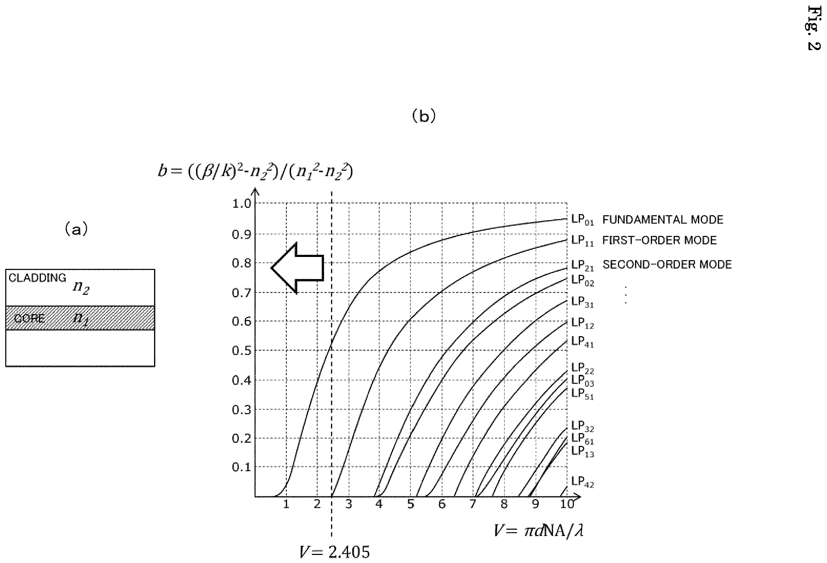

Fig. 2 is a diagram showing a basic structure of an optical fiber and the LPml mode of a stepped optical fiber.
[Fig. 3]

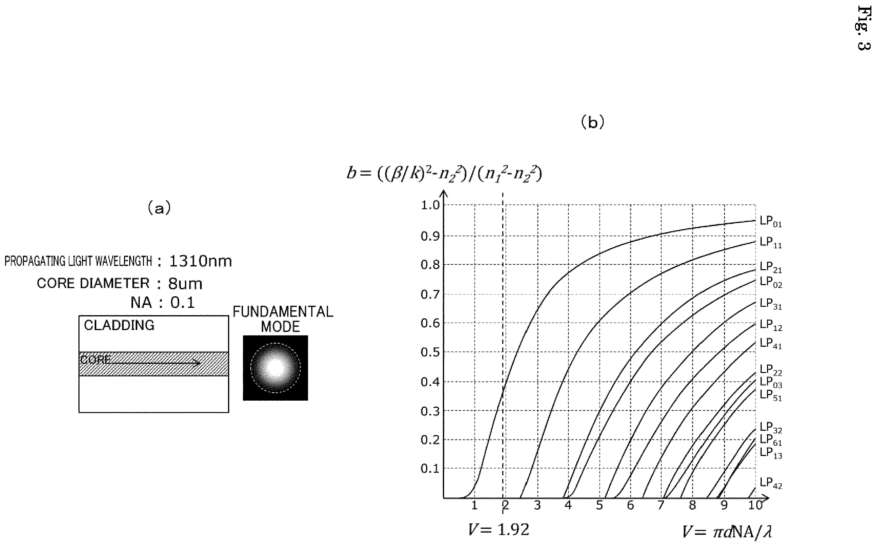

Fig. 3 is a diagram when a normalized frequency V is considered in the case of 1310 nm, which is typical for a single mode.

[Fig. 4]

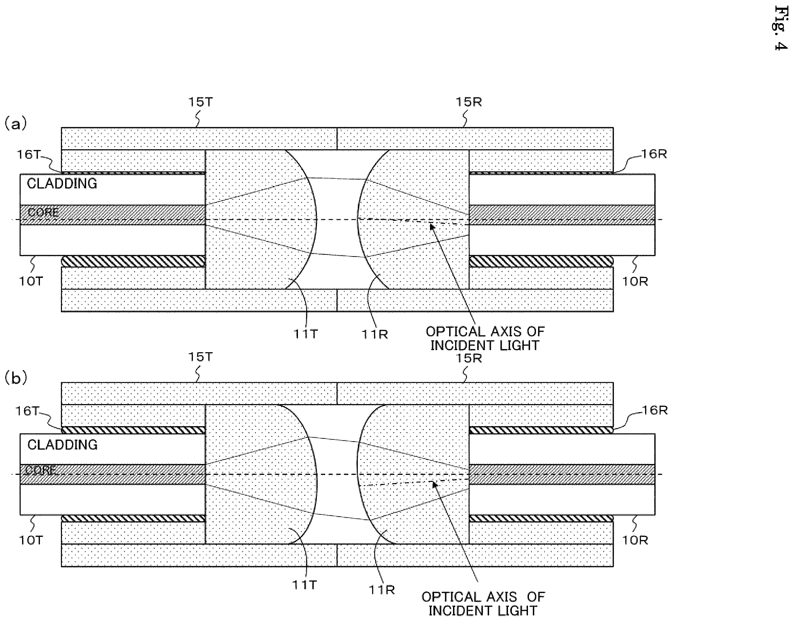

Fig. 4 is a diagram showing an example of optical communication using spatial coupling.
[Fig. 5]

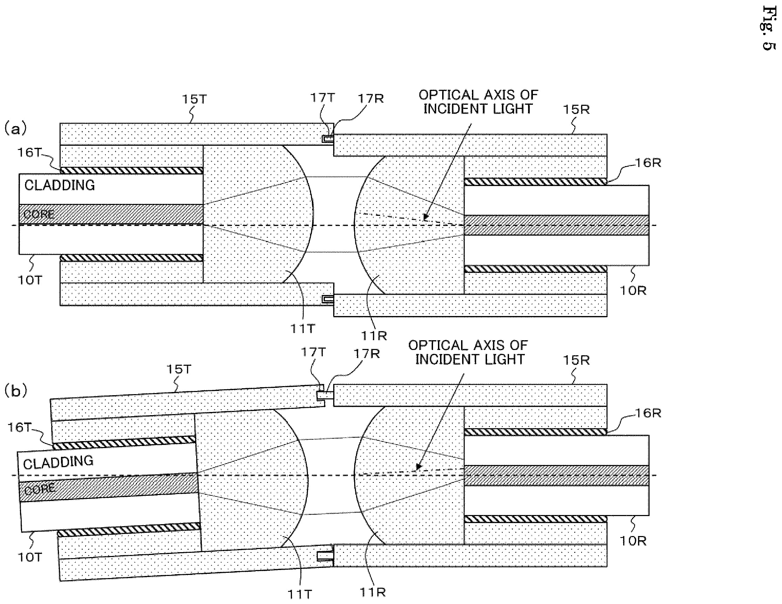

Fig. 5 is a diagram showing an example of optical communication using spatial coupling.
[Fig. 6]

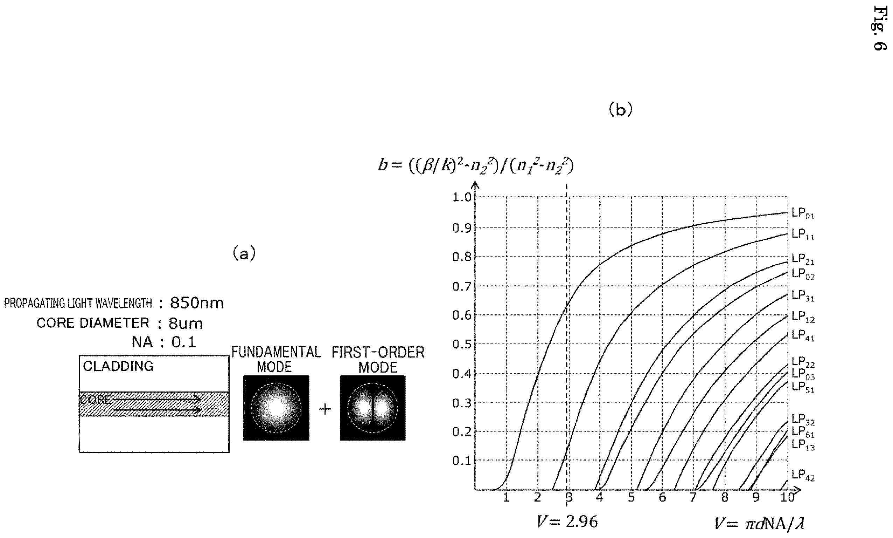

Fig. 6 is a diagram for explaining that a fundamental mode of LP01 and a first-order mode of LP11 can exist when light with a wavelength of 850 nm is input to a 1310 nm single-mode fiber.
[Fig. 7]

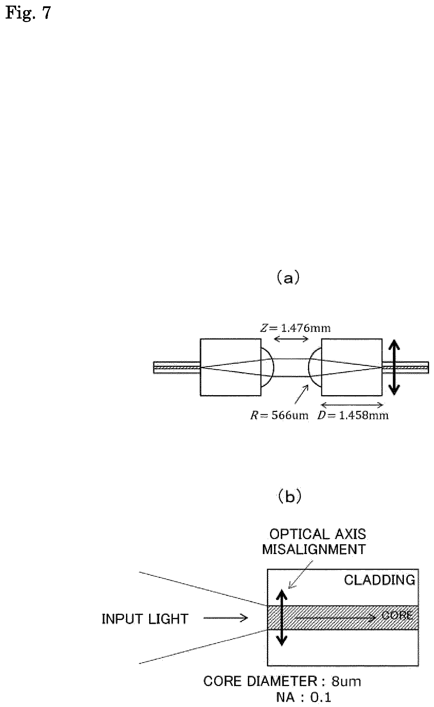

Fig. 7 is a diagram for considering the case where the optical axis misalignment occurs under the condition that only the fundamental mode of LP01 exists in the input light.
[Fig. 8]

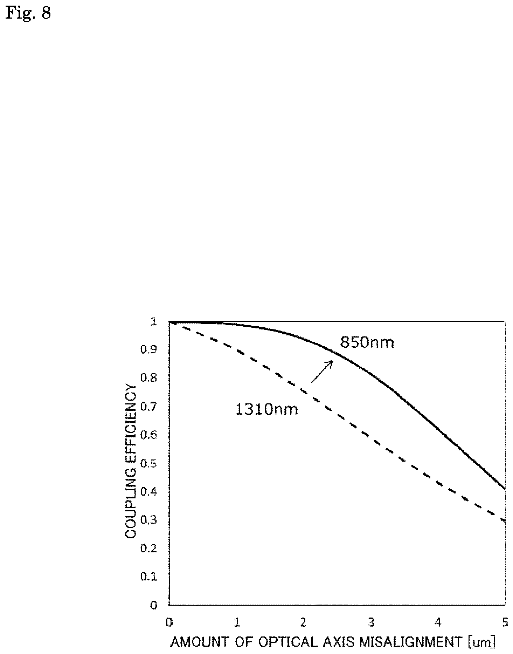

Fig. 8 is a graph showing simulation results of the amount of loss when the wavelengths of input light are 1310 nm and 850 nm.
[Fig. 9]

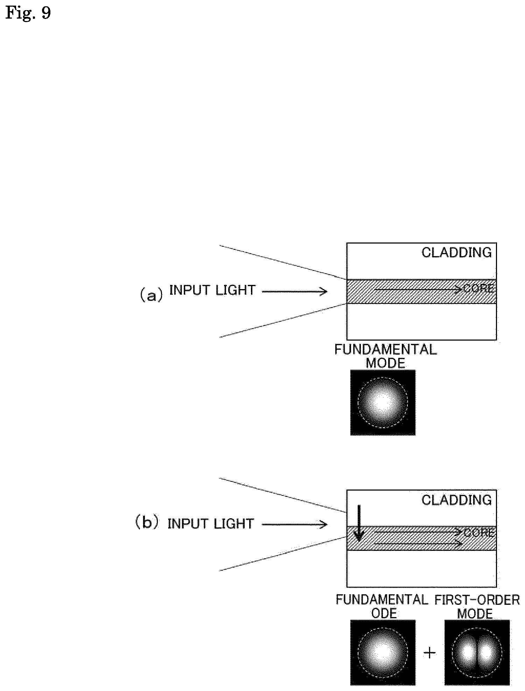

Fig. 9 is a diagram showing that only the fundamental mode exists in the input light when there is no optical axis misalignment, but part of the fundamental mode is converted to the first-order mode when there is optical axis misalignment.
[Fig. 10]

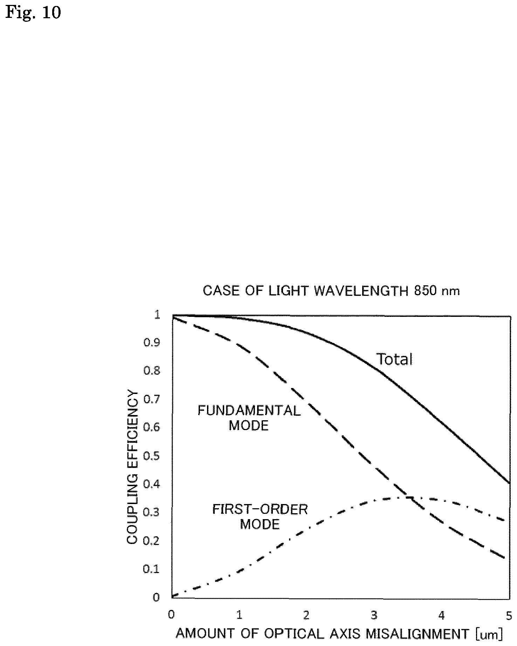

Fig. 10 is a graph for explaining how the fundamental mode is converted to the first-order mode according to the misalignment.
[Fig. 11]

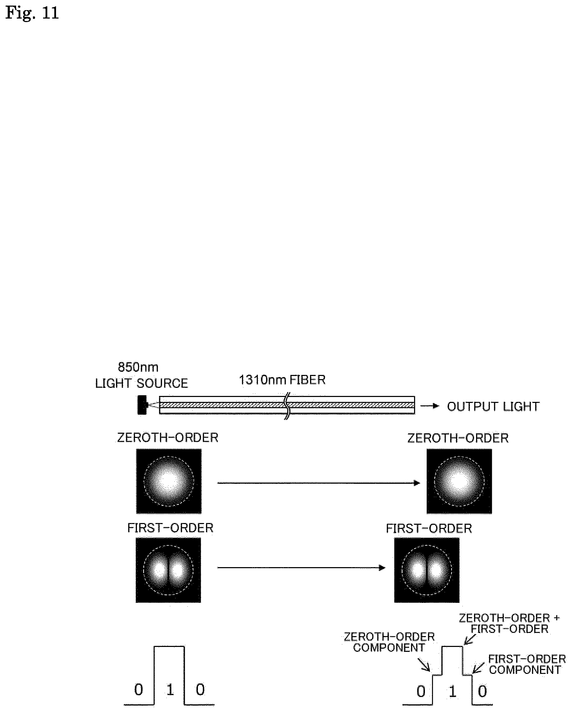

Fig. 11 is a diagram for explaining the occurrence of an inter-mode propagation delay difference.
[Fig. 12]

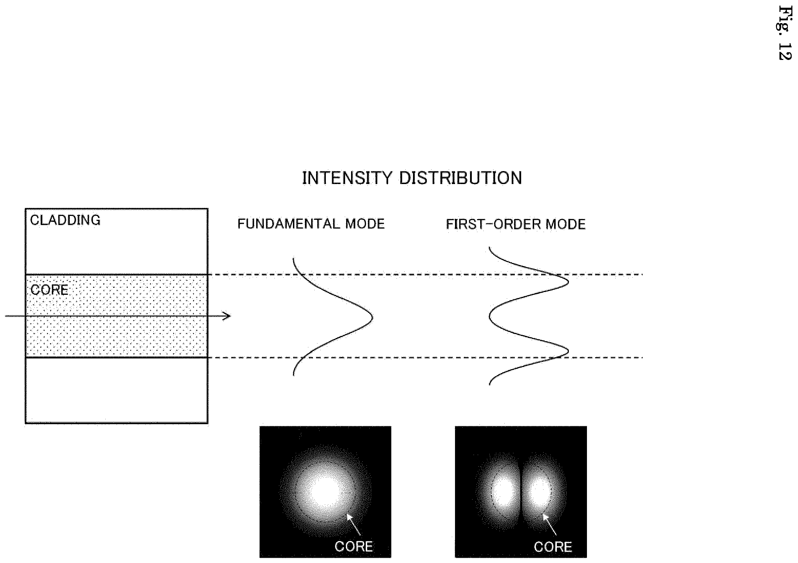

Fig. 12 is a diagram showing an example of intensity distribution when a fundamental mode (zeroth-order mode) and a first-order mode propagate through an optical fiber.
[Fig. 13]

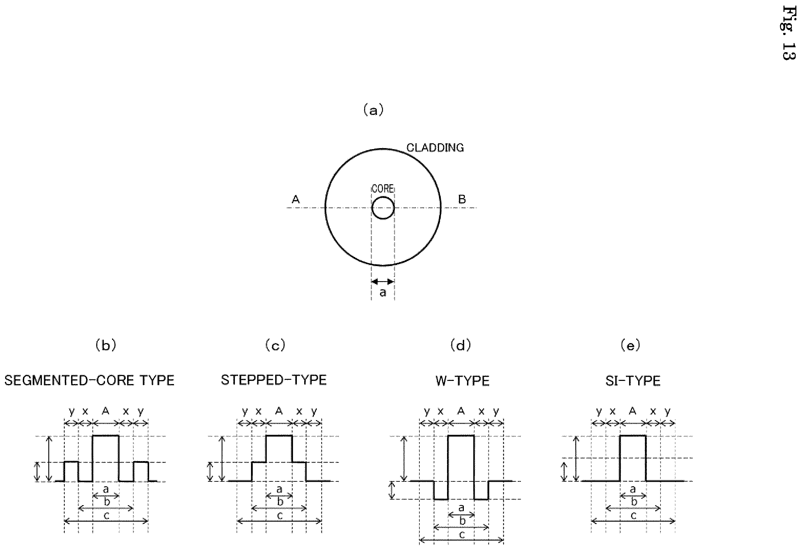

Fig. 13 is a diagram for explaining an example of the control of a refractive index distribution of a core and a cladding.
[Fig. 14]

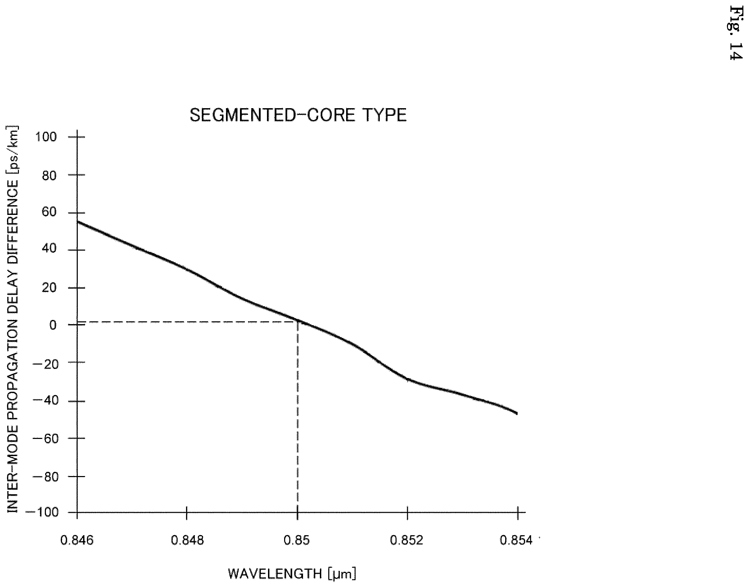

Fig. 14 is a diagram showing simulation results of an inter-mode propagation delay difference (propagation delay difference between the fundamental mode and the first-order mode) when using a segmented-core optical fiber whose refractive index distribution is controlled.
[Fig. 15]

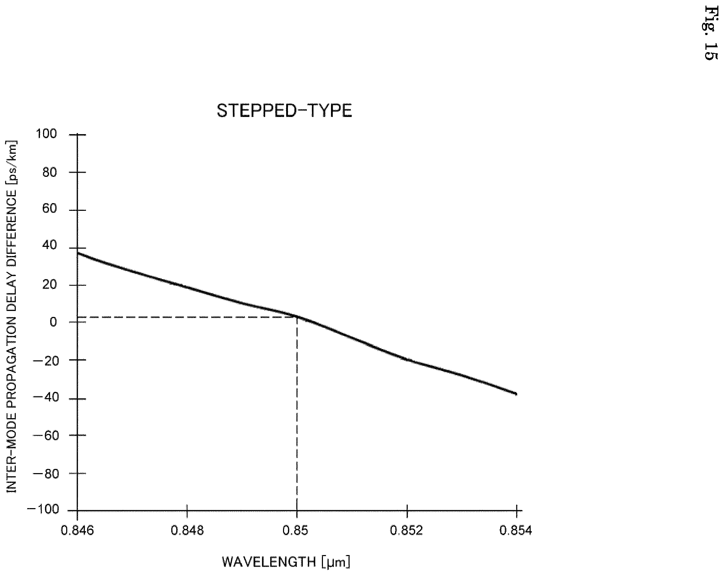

Fig. 15 is a diagram showing simulation results of an inter-mode propagation delay difference (propagation delay difference between the fundamental mode and the first-order mode) when using a stepped optical fiber whose refractive index distribution is controlled.
[Fig. 16]

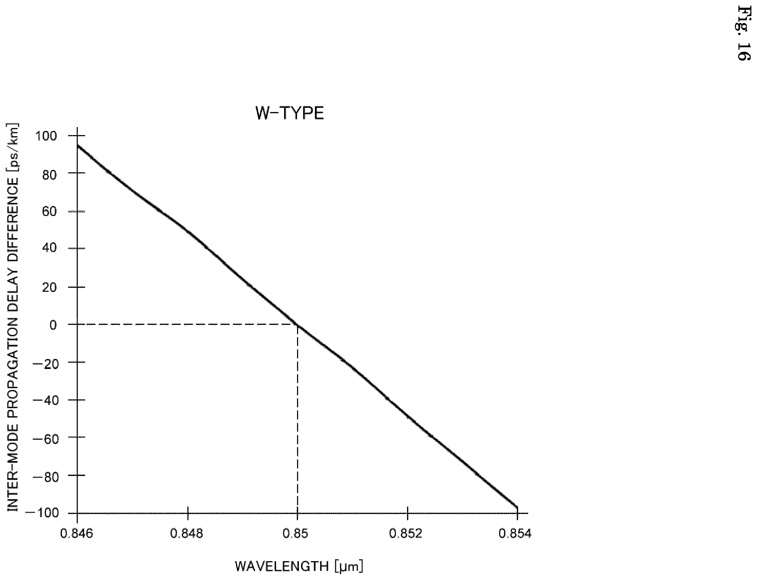

Fig. 16 is a diagram showing simulation results of an inter-mode propagation delay difference (propagation delay difference between the fundamental mode and the first-order mode) when using a W-type optical fiber whose refractive index distribution is controlled.
[Fig. 17]

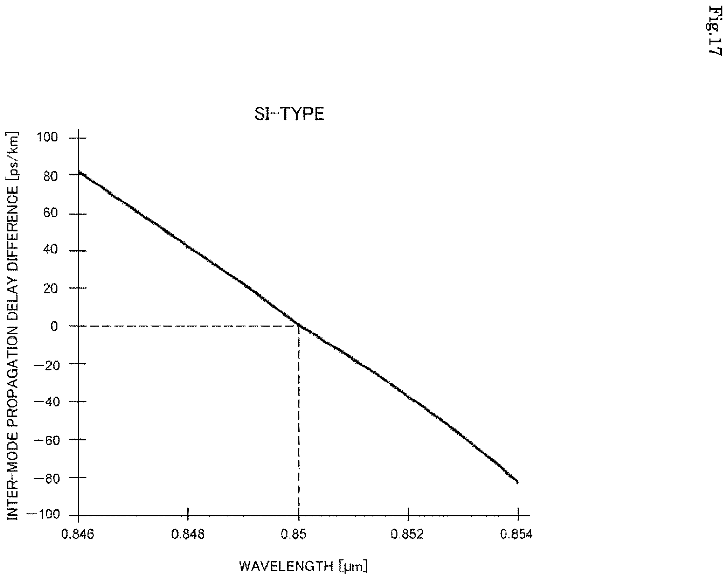

Fig. 17 is a diagram showing simulation results of an inter-mode propagation delay difference (propagation delay difference between the fundamental mode and the first-order mode) when using an SI-type optical fiber whose refractive index distribution is controlled.
[Fig. 18]

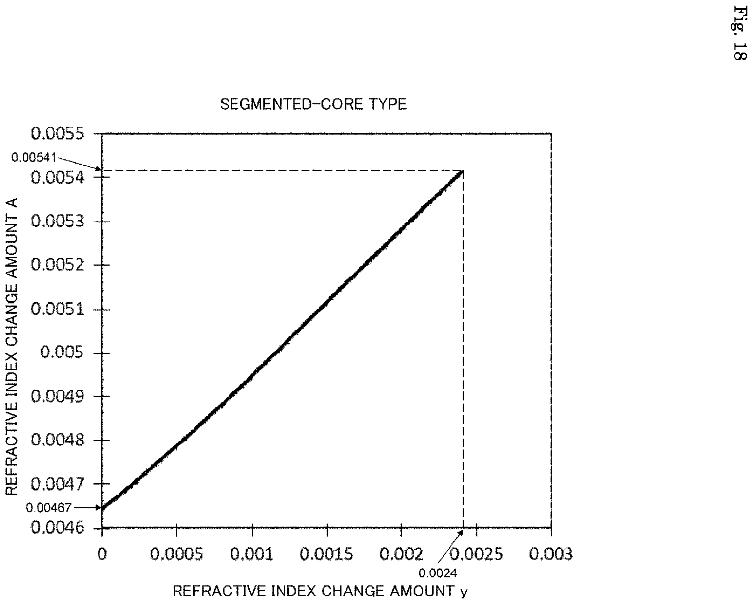

Fig. 18 is a diagram showing simulation results of the relationship of refractive indices in which an inter-mode propagation delay difference (propagation delay difference between the fundamental mode and the first-order mode) is zero in the case of the segmented-core type under the double-mode condition (combination of 850-nm light source and 1310-nm fiber).
[Fig. 19]

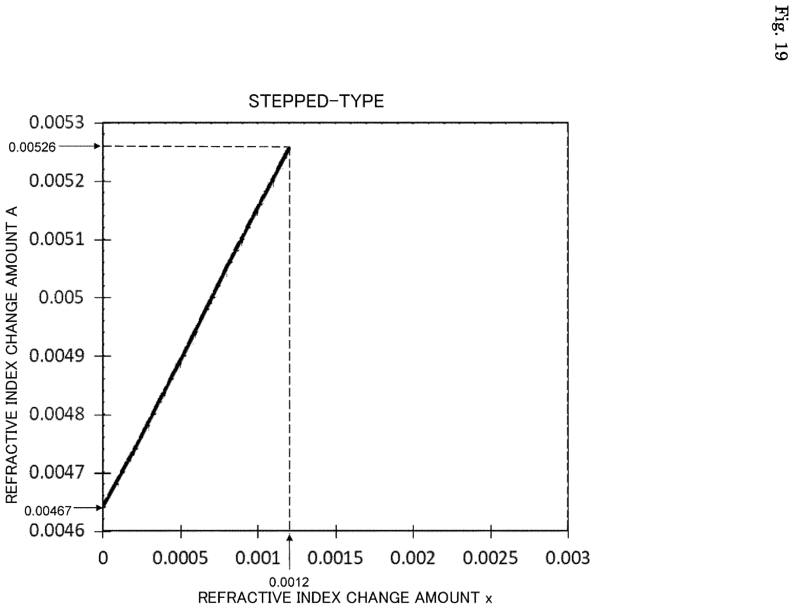

Fig. 19 is a diagram showing simulation results of the relationship of refractive indices in which an inter-mode propagation delay difference (propagation delay difference between the fundamental mode and the first-order mode) is zero in the case of the stepped-type the double-mode condition (combination of 850-nm light source and 1310-nm fiber).
[Fig. 20]

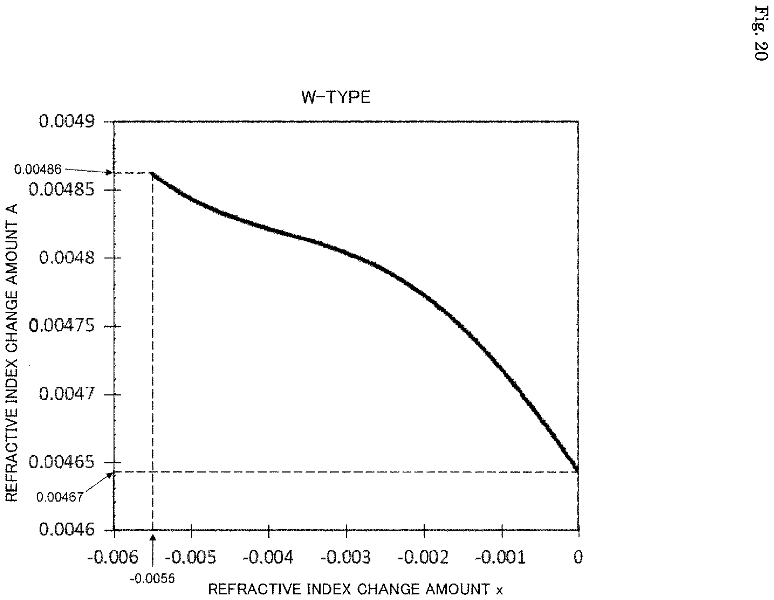

Fig. 20 is a diagram showing simulation results of the relationship of refractive indices in which an inter-mode propagation delay difference (propagation delay difference between the fundamental mode and the first-order mode) is zero in the case of the W-type under the double-mode condition (combination of 850-nm light source and 1310-nm fiber).
[Fig. 21]

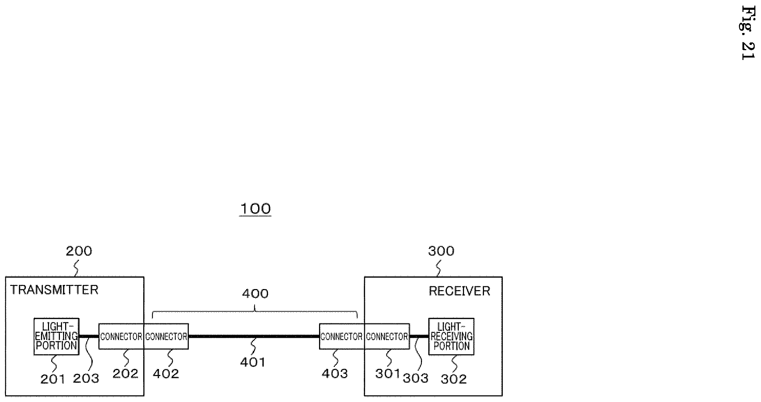

Fig. 21 is a block diagram showing a configuration example of a transmission/reception system to which the optical waveguide of the present technology can be applied.
[Fig. 22]

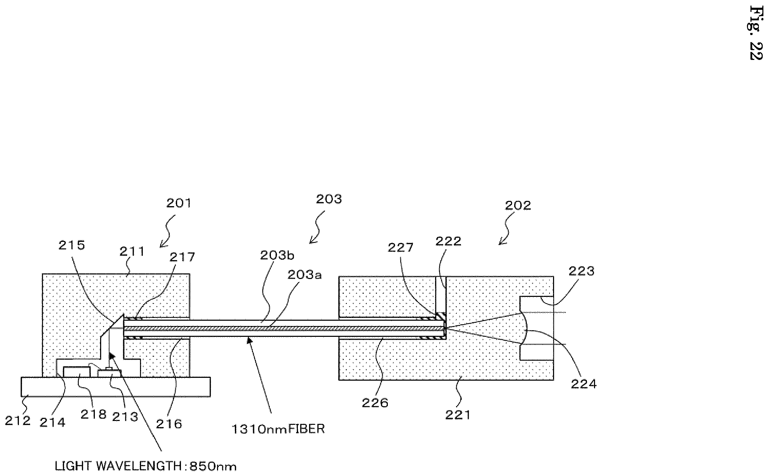

Fig. 22 is a schematic cross-sectional view showing a configuration example of a light-emitting portion and a connector (receptacle) in a transmitter.
[Fig. 23]

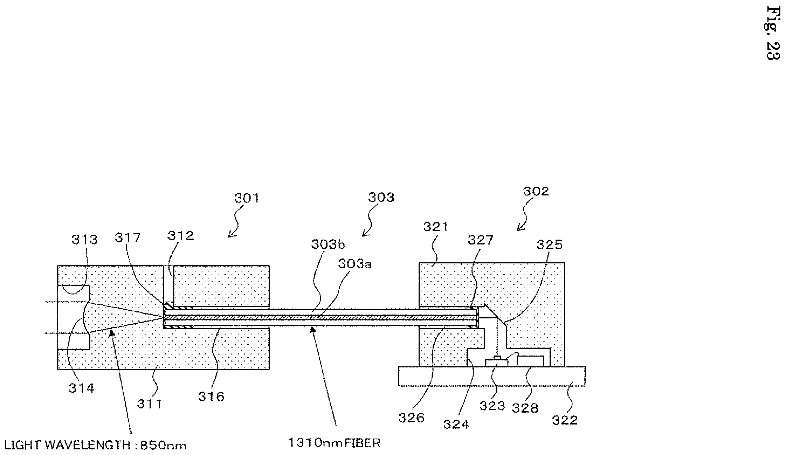

Fig. 23 is a schematic cross-sectional view showing a configuration example of a connector (receptacle) and a light-receiving portion in a receiver.
[Fig. 24]

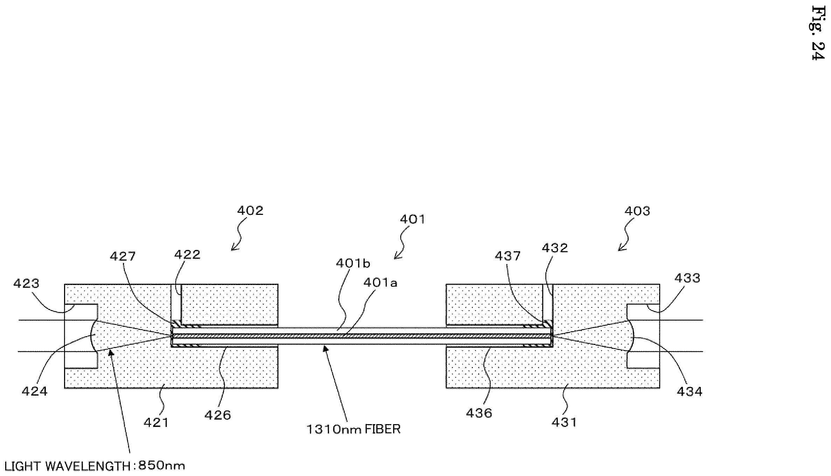

Fig. 24 is a schematic cross-sectional view showing a configuration example of two connectors in a cable.
[Fig. 25]

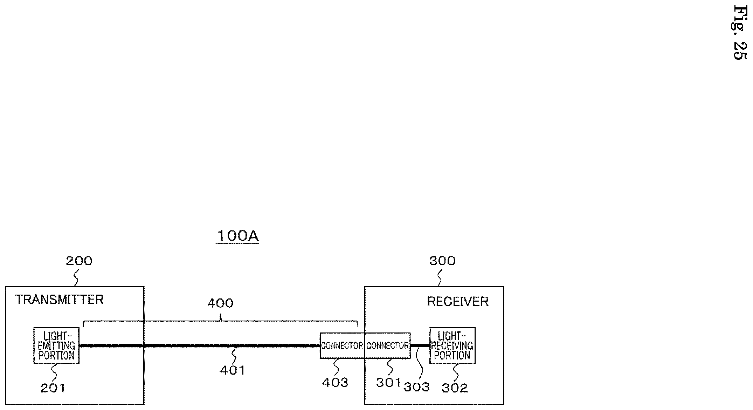

Fig. 25 is a block diagram showing another configuration example of a transmission/reception system to which the optical waveguide of the present technology can be applied.

[Fig. 26]

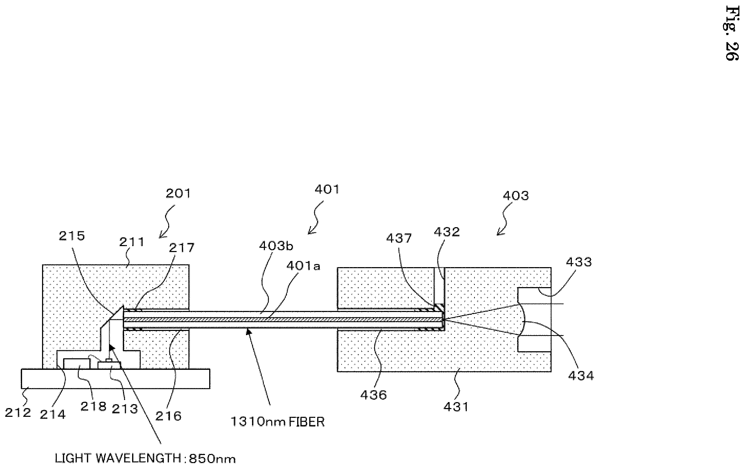

Fig. 26 is a schematic cross-sectional view showing a configuration example of a light-emitting portion in a transmitter and a connector in a cable.

[Description of Embodiments]

Modes for carrying out the present invention (hereinafter referred to as "embodiments") will be described hereinafter. The descriptions will be given in the following order.

1. Embodiment
2. Modification example

<1. Embodiment>

[Basic explanation about present technology]

First, the technology related to the present technology will be described. Fig. 1 shows an outline of optical communication using spatial coupling. In this case, the light emitted from an optical fiber 10T on the transmitting side is shaped into collimated light by a lens 11T and the collimated light is emitted. Then, this collimated light is condensed by a lens 11R on the receiving side and is incident on an optical fiber 10R. In the case of this optical communication, especially in a single-mode fiber, a large optical power loss occurs due to misalignment. The optical fibers 10T and 10R have a double structure including a central core 10a serving as an optical path and a cladding 10b surrounding the central core 10a.

Next, the basic concept of modes will be explained. When light is caused to propagate in a single mode through an optical fiber, it is necessary to determine parameters such as the refractive index and the core diameter of the fiber so that only one mode exists.

Fig. 2(a) shows the basic structure of an optical fiber. An optical fiber has a structure in which a central portion called a core is covered with a layer called a cladding. In this case, the core has a high refractive index n1 and the cladding has a low refractive index n2, so that light propagates while being confined in the core.

Fig. 2(b) shows the LPml (Linearly Polarized) mode of a stepped optical fiber and the normalized propagation constant b as a function of the normalized frequency V. The vertical axis the normalized propagation constant b, in which b is 0 when a certain mode does not pass through the fiber (light is blocked) and b approaches 1 as the optical power is confined in the core (light can propagate through the fiber). The horizontal axis the normalized frequency V, which can be expressed by the following formula (1). Here, d is the core diameter, NA is the numerical aperture, and $\lambda$ is the wavelength of light.

$$V = \pi d NA / \lambda \ \dots \ (1)$$

For example, when V is 2.405, the LP11 mode is blocked, so only the LP01 mode exists. Therefore, the state of V=2.405 or less is the single mode. Here, LP01 is the fundamental mode (zeroth-order mode), and LP11, LP21, ..., and so on are the first-order mode, the second-order mode, ..., and so on.

For example, as shown in Fig. 3(a), the normalized frequency V will be considered in the case of 1310 nm, which is typical for a single mode. Here, assuming that the core diameter d and the numerical aperture NA are d=8 pm and NA=0.1, which are general parameters for a 1310-nm optical fiber, and the wavelength of light propagating through the fiber is 1310 nm, V is 1.92 from the formula (1).

Therefore, as shown in Fig. 3(b), the normalized frequency V is 2.405 or less, so that only the fundamental mode of LP01 propagates, resulting in a single mode. Here, when the core diameter increases, the number of propagation modes increases. Incidentally, for example, in a general multi-mode fiber, the core diameter is set to 50 pm, so that several hundred modes propagate.

Considering optical communication using spatial coupling as shown in Fig. 1, in a single mode, since the core diameter is small, there is a problem that the alignment of the optical coupling portion on the transmitting/receiving sides becomes severe, and the precision requirement for accurately aligning the optical axis increases.

In order to solve this problem, it is common to use high precision parts or to machine a light input portion into an optical fiber to facilitate the insertion of the light into the fiber core. However, high-precision parts are expensive, and those that require machining are expensive, so connectors and systems for single-mode communication are generally expensive.

Figs. 4 and 5 show an example of factors that degrade the accuracy of optical axis alignment. For example, as shown in Fig. 4(a), optical axis misalignment occurs due to uneven amounts of fixing materials 16T and 16R for fixing ferrules 15T and 15R and optical fibers 10T and 10R. Further, for example, as shown in Fig. 4(b), optical axis misalignment occurs due to insufficient shaping accuracy of lenses 11T and 11R.

Further, as shown in Figs. 5(a) and 5(b), optical axis misalignment occurs due to insufficient precision of the positioning mechanisms (recessed portion 17T and protruded portion 17R) provided in the ferrules 15T and 15R. A convex portion 17R shown in Figs. 5(a) and 5(b) may be a pin.

According to a first aspect of the present technology, the optical fiber is configured to propagate only the fundamental mode at a first wavelength and propagates at least the first-order mode as well as the fundamental mode at a second wavelength. Here, the optical fiber is configured to have zero chromatic dispersion at the first wavelength. For example, the first wavelength is 1310 nm. In this case, under the conditions of Fig. 3(a), the normalized frequency V is 1.92 as shown in Fig. 3(b), and the optical fiber functions as a single-mode fiber.

Also, for example, the second wavelength is 850 nm. When light with a wavelength of 850 nm instead of 1310 nm is input to the optical fiber under the same conditions as in Fig. 3(a), the normalized frequency V is 2.96 as shown in Fig. 6(b). Therefore, as shown in Fig. 6(a), a fundamental mode of LP01 and a first-order mode of LP11 can exist.

A case where when an optical system as shown in Fig. 7(a) is assembled, the position of the optical fiber on the receiving side is misaligned in the direction perpendicular to the optical axis (see the arrows in Figs. 7(a) and 7(b)), that is, optical axis misalignment occurs under the condition that only the fundamental mode of LP01 exists in the input light will be considered.

Fig. 8 is a graph showing simulation results of optical power coupling efficiency in that case. The horizontal axis represents the amount of optical axis misalignment, and the vertical axis represents the coupling efficiency. With no misalignment, 100% of the power propagates through the optical fiber and the coupling efficiency is 1. Then, for example, if only 50% of the power of the input light propagates through the optical fiber, the coupling efficiency is 0.5.

Comparing by the wavelengths 1310 nm and 850 nm of input light, it can be seen that the characteristics of the 850 nm case are better. The reason for this that only the fundamental mode can propagate in the case of 1310 nm, whereas the first-order mode as well as the fundamental mode can propagate in the case of 850 nm (see Fig. 6(a)).

That is, when there is no optical axis misalignment, only the fundamental mode exists in the input light as shown in Fig. 9(a). On the other hand, when there is optical axis misalignment, part of the fundamental mode is converted to the first-order mode by utilizing the phase difference caused by the refractive index difference between the cladding and the core, as shown in Fig. 9(b). This first-order mode cannot propagate in the case of 1310 nm, but this first-order mode can also propagate in the case of 850 nm, so the characteristics in the case of 850 nm are improved.

In the graph of Fig. 10, the fundamental mode (zeroth-order mode) component and the first-order mode component are shown separately, and the sum of them is the total curve. Since the input light exists only in the fundamental mode, it can be seen that the fundamental mode is converted to the first-order mode according to the misalignment. On the other hand, in the case of 1310 nm, only the fundamental mode can propagate as shown in Fig. 3(a), so the fundamental mode is purely reduced as shown in Fig. 8.

In Fig. 8, comparing by the coupling efficiency for the cases of 1310 nm and 850 nm, the accuracy of misalignment can be mitigated by about 1.8 times at the coupling efficiency of 0.8 (about -1 dB) and by 2.35 times at the coupling efficiency of 0.9 (about -0.5 dB).

As described above, if the optical fiber is configured to propagate only the fundamental mode at a first wavelength (for example, 1310 nm) and propagate at least the first-order mode as well as the fundamental mode at a second wavelength (for example, 850 nm), when communication is performed using light of the second wavelength, since at least the first-order mode component generated due to optical axis misalignment propagates together with the fundamental mode component, it is possible to reduce the coupling loss of optical power due to optical axis misalignment.

According to a second aspect of the present technology, the optical fiber is configured such that a refractive index distribution of the core and the cladding is controlled so that an inter-mode propagation delay difference is within a predetermined threshold, for example, the inter-mode propagation delay difference is zero, when communication is performed using light of the second wavelength.

Fig. 11 shows an example of a case where a conventional 1310-nm fiber (single-mode optical fiber propagating only the zeroth-order mode (fundamental mode) at a wavelength of 1310 nm) transmits light (optical signal) from an 850-nm light source, composed of the zeroth-order mode component and the first-order mode component of the wavelength of 850 nm.

In this case, a propagation delay difference occurs between the zeroth-order mode and the first-order mode at the output end of the optical fiber. Such an inter-mode propagation delay difference is caused by a difference in reflection angles of light components of each mode within the optical fiber. In this case, the higher the order, the steeper the angle of reflection. That is, an inter-mode propagation delay difference occurs due to the change in the optical path length depending on the mode.

As shown in Fig. 11, when "1" is expressed by the sum of the power of the zeroth-order mode and the first-order mode at the input end of an optical fiber, if an inter-mode propagation delay difference occurs at the output end of the optical fiber, a step occurs in the rising waveform from "0" to "1" or the falling waveform from "1" to "0". This phenomenon causes waveform distortion in data transmission, resulting in deterioration of signal quality. This deterioration in signal quality becomes more prominent as the length of the optical fiber increases and as the data rate increases.

When waveform distortion that causes signal quality deterioration occurs in this way, although it is conceivable to correct the waveform distortion to suppress signal quality deterioration, a waveform distortion correction circuit is required on the transmitting and receiving sides, leading to an increase in cost and power consumption.

In the present technology, as described above, the refractive index distribution of the core and cladding of the optical fiber is controlled so that the inter-mode propagation delay difference is within a predetermined threshold when communication is performed using light of the second wavelength. As a result, high-quality signal transmission can be realized without increasing the cost and power consumption due to the provision of a waveform distortion correction circuit.

When propagating through the optical fiber, each mode of light advances while its intensity distribution does not fit within the core but spreads into the cladding. Fig. 12 shows an example of the intensity distribution when the fundamental mode (zeroth-order mode) and the first-order mode propagate through the optical fiber. As shown in the figure, it can be seen that the intensity distribution of both the fundamental mode and the first-order mode penetrates into the cladding.

The core has a higher refractive index than the cladding, which means that the propagation speed of light in the core is slower than that of the cladding. In general, the higher the order of the mode, the steeper the angle of total reflection of light propagating in the optical fiber and the longer becomes the propagation path. However, since the intensity distribution of light passing through the cladding side increases, it is possible to control the propagation speed of each mode uniformly by appropriately controlling the refractive index distribution of the core and cladding.

Fig. 13(a) shows a cross-section of an optical fiber. Also, Figs. 13(b) to 13(e) show examples of a refractive index distribution of the core and the cladding. This refractive index distribution shows the refractive index distribution near the core on the line A-B in Fig. 13(a), where the vertical axis indicates the refractive index and the horizontal axis indicates the physical distance. In the illustrated example, the diameter of the core is a, but the diameter is not necessarily limited to this, and the diameter of the core may be defined as smaller or larger than a.

Fig. 13(b) shows a so-called segmented-core-type refractive index distribution, Fig. 13(c) shows a so-called stepped refractive index distribution, Fig. 13(d) shows a so-called W-type refractive index distribution, and Fig. 13(e) shows a so-called SI (step index)-type refractive index distribution.

As shown in Figs. 13(b) to 13(e), the refractive index distribution of the optical fiber includes the distribution of refractive indices of a first region from the center to a first diameter a, a second region to a second diameter b outside this first region, a third region to a third diameter c outside the second region, and a fourth region outside the third region. Here, the refractive index change amounts of the first, second, and third regions with respect to the refractive index of the fourth region, that is, when the refractive index of the fourth region is used as a reference, are defined as A, x, and y, respectively.

In the case of the segmented-core type, the refractive index of the third region is higher than that of the fourth region, the refractive index of the second region is equal to that of the fourth region, and the refractive index of the first region is higher than that of the third region. In the case of the stepped-type, the refractive index of the third region is equal to than in the fourth region, the refractive index of the second region is higher than that of the fourth region, and the refractive index of the first region is higher than that of the second region.

In the case of the W-type, the refractive index of the third region is equal to that of the fourth region, the refractive index of the second region is lower than that of the fourth region, and the refractive index of the first region is higher than that of the fourth region. In the case of the SI-type, the refractive indices of the third region and the second region are equal to that of the fourth region, and the refractive index of the first region is higher than that of the fourth region.

The refractive index distribution of each type is controlled as follows, for example, so that the inter-mode propagation delay difference is zero under double-mode conditions, that is, under the combination of an 850-nm light source and a 1310-nm fiber. Note that the refractive index of the fourth region is 1.4524 according to the Sellmeier's dispersion formula. That is, if the parameters of general quartz are applied to the Sellmeier's dispersion formula, the refractive index for light with a wavelength of 850 nm is 1.4524.

In the case of the segmented-core type, the first diameter a is 7 pm, the second diameter b is 9 pm, the third diameter c is 11 pm, the refractive index change amount y of the third region with respect to the refractive index of the fourth region is y +0.000827, and the refractive index change amount A of the first region with respect to the refractive index of the fourth region is +0.004882.

Fig. 14 shows simulation results of the inter-mode propagation delay difference (propagation delay difference between the fundamental mode and the first-order mode) when using a segmented-core optical fiber whose refractive index distribution is controlled as described above. Here, the horizontal axis the wavelength of the light source, and the vertical axis the inter-mode propagation delay difference. From this simulation result, it can be seen that the inter-mode propagation delay difference (propagation delay difference between the fundamental mode and the first-order mode) is zero or substantially zero at 850 nm (=0.85 pm).

In the case of the stepped-type, the first diameter a is 7 pm, the second diameter b is 13 pm, the refractive index change amount x of the second region with respect to the refractive index of the fourth region is +0.000811, and the refractive index change amount A of the first region with respect to the refractive index of the fourth region is +0.005053.

Fig. 15 shows simulation results of the inter-mode propagation delay difference (propagation delay difference between the fundamental mode and the first-order mode) when using a stepped optical fiber whose refractive index distribution is controlled as described above. Here, the horizontal axis the wavelength of the light source, and the vertical axis the inter-mode propagation delay difference. From this simulation result, it can be seen that the inter-mode propagation delay difference (propagation delay difference between the fundamental mode and the first-order mode) is zero or substantially zero at 850 nm (=0.85 pm).

In the case of the W-type, the first diameter a is 7 pm, the second diameter b is 9 pm, the refractive index change amount x of the first region with respect to the refractive index of the fourth region is -0.002245, and the refractive index change amount A of the first region with respect to the refractive index of the fourth region is +0.004778.

Fig. 16 shows simulation results of the inter-mode propagation delay difference (propagation delay difference between the fundamental mode and the first-order mode) when using a W-type optical fiber whose refractive index distribution is controlled as described above. Here, the horizontal axis the wavelength of the light source, and the vertical axis the inter-mode propagation delay difference. From this simulation result, it can be seen that the inter-mode propagation delay difference (propagation delay difference between the fundamental mode and the first-order mode) is zero or substantially zero at 850 nm (=0.85 pm).

In the case of the SI-type, the first diameter is a, and the refractive index change amount A of the first region with respect to the refractive index of the fourth region is +0.00467.

Fig. 17 shows simulation results of the inter-mode propagation delay difference (propagation delay difference between the fundamental mode and the first-order mode) when using an SI-type optical fiber whose refractive index distribution is controlled as described above. Here, the horizontal axis the wavelength of the light source, and the vertical axis the inter-mode propagation delay difference. From this simulation result, it can be seen that the inter-mode propagation delay difference (propagation delay difference between the fundamental mode and the first-order mode) is zero or substantially zero at 850 nm (=0.85 pm).

Fig. 18 shows simulation results of the relationship of refractive indices in which the inter-mode propagation delay difference (propagation delay difference between the fundamental mode and the first-order mode) is zero in the case of the segmented-core type (see Fig. 13(b)) under the double-mode condition, that is, a combination of an 850-nm light source and a 1310-nm fiber when the refractive index of the fourth region is 1.4524, the first diameter a is 7 pm, the second diameter b is 9 pm, and the third diameter c is 11 pm.

Here, the horizontal axis the refractive index change amount y of the third region with respect to the refractive index of the fourth region, and the vertical axis the refractive index change amount A of the first region with respect to the refractive index of the fourth region. The refractive index change amount A when the refractive index change amount y is zero is +0.00467 because it is equal to the case where the inter-mode propagation delay difference is zero in the case of the SI-type.

From this simulation result, it can be seen that when the inter-mode propagation delay difference is made zero, the refractive index change amount y of the third region with respect to the refractive index of the fourth region can take a value within the range of 0 to +0.0024, and the refractive index change amount A of the first region with respect to the refractive index of the fourth region can take a value within the range of +0.00467 to +0.00541.

This simulation result shows the refractive index relationship under the condition that only the fundamental mode and the first-order mode exist, and is the refractive index relationship under the condition that higher-order modes do not exist.

If the inter-mode propagation delay difference between the fundamental mode and the first-order mode is made zero in the range of the refractive index change amount y exceeding +0.0024 and and a refractive index conversion amount exceeding +0.00541, the refractive index difference between the core and the cladding becomes large. As a result, the angle at which the light can be totally reflected becomes steeper, and the conditions for transmitting the second-order mode are satisfied. Thus, the second-order mode occurring due to optical axis misalignment, for example, also propagates through the optical fiber. In that case, the inter-mode propagation delay difference cannot be adjusted with respect to the second-order mode, leading to the occurrence of waveform distortion.

Therefore, under the condition that only the fundamental mode and the first-order mode exist, as described above, the refractive index change amount y is within the range of 0 to +0.0024, and the refractive index change amount A is within the range of +0.00467 to +0.00541. Although detailed explanation is omitted, the simulation results for the stepped-type and the W-type shown below also show the relationship of the refractive indices under the condition that only the fundamental mode and the first-order mode exist.

Fig. 19 shows simulation results of the relationship of refractive indices in which the inter-mode propagation delay difference (propagation delay difference between the fundamental mode and the first-order mode) is zero in the case of the stepped-type (see Fig. 13(c)) under the double-mode condition, that is, a combination of an 850-nm light source and a 1310-nm fiber when the refractive index of the fourth region is 1.4524, the first diameter a is 7 pm, and the second diameter b is 13 pm.

Here, the horizontal axis the refractive index change amount x of the second region with respect to the refractive index of the fourth region, and the vertical axis the refractive index change amount A of the first region with respect to the refractive index of the fourth region. The refractive index change amount A when the refractive index change amount x is zero is +0.00467 because it is equal to the case where the inter-mode propagation delay difference is zero in the SI-type.

From this simulation result, it can be seen that when the inter-mode propagation delay difference is made zero, the refractive index change amount x of the second region with respect to the refractive index of the fourth region can take a value within the range of 0 to +0.0012, and the refractive index change amount A of the first region with respect to the refractive index of the fourth region can take a value within the range of +0.00467 to +0.00526.

Fig. 20 shows simulation results of the relationship of refractive indices in which the inter-mode propagation delay difference (propagation delay difference between the fundamental mode and the first-order mode) is zero in the case of the W-type (see Fig. 13(d)) under the double-mode condition, that is, a combination of an 850-nm light source and a 1310-nm fiber when the refractive index of the fourth region is 1.4524, the first diameter a is 7 pm, and the second diameter b is 9 pm.

Here, the horizontal axis the refractive index change amount x of the second region with respect to the refractive index of the fourth region, and the vertical axis the refractive index change amount A of the first region with respect to the refractive index of the fourth region. The refractive index change amount A when the refractive index change amount x is zero is +0.00467 because it is equal to the case where the inter-mode propagation delay difference is zero in the SI-type.

From this simulation result, it can be seen that when the inter-mode propagation delay difference is made zero, the refractive index change amount x of the second region with respect to the refractive index of the fourth region can take a value within the range of -0.0055 to 0, and the refractive index change amount A of the first region with respect to the refractive index of the fourth region can take a value within the range of +0.00486 to +0.00467.

In this way, the optical fiber is configured such that the refractive index distribution of the core and the cladding is controlled so that the inter-mode propagation delay difference is within a predetermined threshold, for example, the inter-mode propagation delay difference is zero, when communication is performed using the light of the second wavelength. Thus, it is possible to keep the inter-mode propagation delay difference within a predetermined threshold when communication is performed using light of the second wavelength. Further, high-quality signal transmission can be realized without increasing the cost and power consumption due to the provision of a waveform distortion correction circuit.

[Transmission/reception system]

Fig. 21 shows a configuration example of a transmission/reception system 100. This transmission/reception system 100 has a transmitter 200, a receiver 300 and a cable 400. The transmitter 200 is, for example, an AV source such as a personal computer (PC), a game console, a disc player, a set-top box, a digital camera, a mobile phone, and the like. The receiver 300 is, for example, a television receiver, a projector, a PC monitor, or the like. The transmitter 200 and the receiver 300 are connected via the cable 400.

The transmitter 200 has a light-emitting portion 201, a connector 202 as a receptacle, and an optical fiber 203 that propagates the light emitted by the light-emitting portion 201 to the connector 202. The light-emitting portion 201 includes a laser element such as a VCSEL, or a light-emitting element (light source) such as an LED (light-emitting diode). The light-emitting portion 201 converts an electrical signal (transmission signal) generated by a transmission circuit (not shown) to an optical signal. The light (optical signal) emitted by the light-emitting portion 201 propagates to the connector 202 through the optical fiber 203.

The receiver 300 also has a connector 301 as a receptacle, a light-receiving portion 302, and an optical fiber 303 for propagating the light obtained at the connector 301 to the light-receiving portion 302. The light-receiving portion 302 includes a light-receiving element such as a photodiode. The light-receiving portion 302 converts an optical signal transmitted from the connector 301 to an electric signal (receiving signal) and supplies the electric signal to a receiving circuit (not shown).

The cable 400 is configured to have connectors 402 and 403 as plugs at one end and the other end of the optical fiber 401. The connector 402 at one end of the optical fiber 401 is connected to the connector 202 of the transmitter 200, and the connector 403 at the other end of the optical fiber 401 is connected to the connector 301 of the receiver 300.

In this transmission/reception system 100, the optical fiber of the present technology is applied to the optical fiber 203 of the transmitter 200, the optical fiber 303 of the receiver 300, and the optical fiber 401 of the cable 400. That is, these optical fibers are configured to propagate only the fundamental mode at a first wavelength and propagate at least the first-order mode as well as the fundamental mode at a second wavelength.

In addition, these optical fibers are configured such that a refractive index distribution of the core and the cladding is controlled so that an inter-mode propagation delay difference is within a predetermined threshold, for example, the inter-mode propagation delay difference is zero, when communication is performed using light of the second wavelength (see Figs. 13(b) to 13(e)). In this transmission/reception system 100, communication is performed using light of the second wavelength.

In other words, communication is performed under double-mode conditions, for example, that a combination of an 850-nm light source and a 1310-nm fiber (whose refractive index distribution of the core and cladding is controlled so that the inter-mode propagation delay difference is zero) is applied.

Fig. 22 shows a configuration example of the light-emitting portion 201 and the connector 202 in the transmitter 200. This configuration example is an example, and the configuration of the transmitter 200 is not limited to this.

The light-emitting portion 201 has a ferrule 211. The ferrule 211 is made of a light-transmissive material such as a synthetic resin or glass, or a material such as silicon that transmits a specific wavelength.

The ferrule 211 is provided with an optical fiber insertion hole 216 extending rearward from the front side. The optical fiber 203 is fixed to the ferrule 211 with an adhesive 217 after being inserted into the optical fiber insertion hole 216. The optical fiber 203 has a double structure including a central core 203a serving as an optical path and a cladding 203b surrounding the central core 203a.

A substrate 212 on which the light-emitting element 213 and a light-emitting element driver 218 are mounted is fixed to the lower surface side of the ferrule 211. In this case, the light-emitting element 213 is mounted on the substrate 212 in alignment with the optical fiber 203. Here, the position of the substrate 212 is adjusted and fixed so that the exit portion of the light-emitting element 213 is aligned with the optical axis of the optical fiber 203.

Further, the ferrule 211 is formed with an arrangement hole 214 extending upward from the lower surface side. In order to change the optical path of the light from the light-emitting element 213 to the direction of the optical fiber 203, the bottom portion of the arrangement hole 214 is formed as an inclined surface, and a mirror (optical path changing portion) 215 is arranged on this inclined surface. Regarding the mirror 215, it is conceivable not only to fix the mirror 215 which is separately produced to the inclined surface, but also to form the mirror 215 on the inclined surface by vapor deposition or the like.

The connector 202 has a connector main body 221. The connector main body 221 is made of a light-transmissive material such as a synthetic resin or glass, or a material such as silicon that transmits a specific wavelength, and is configured as a ferrule with a lens.

By configuring the connector main body 221 as a ferrule with a lens in this way, it is possible to easily achieve the optical axis alignment between the optical fiber and the lens. Since the connector main body 221 is configured as a ferrule with a lens in this way, multi-channel communication can be easily realized simply by inserting an optical fiber into the ferrule even in the case of multi-channel.

The connector main body 221 has a concave light exit portion (light transmission space) 223 formed on the front side thereof. A lens (convex lens) 224 is formed integrally with the connector main body 221 so as to be positioned at the bottom of the light exit portion 223.

Further, an optical fiber insertion hole 226 extending forward from the back side is provided in the connector main body 221 so as to be aligned with the lens 224. The optical fiber insertion hole 226 is formed so that the optical axis of the lens 224 is aligned with the core 203a of the optical fiber 203 inserted therein. The optical fiber insertion hole 226 is shaped so that its bottom position, that is, the contact position of the tip (incident end) when the optical fiber 203 is inserted, coincides with the focal position of the lens 224.

Further, an adhesive injection hole 222 extending downward from the upper surface side is formed in the connector main body 221 so as to communicate with the vicinity of the bottom position of the optical fiber insertion hole 226. After the optical fiber 203 is inserted into the optical fiber insertion hole 226, an adhesive 227 is injected around the optical fiber 203 from the adhesive injection hole 222, whereby the optical fiber 203 is fixed to the connector main body 221.

In the connector 202, the lens 224 has a function of shaping the light emitted from the optical fiber 203 into collimated light and emitting the collimated light. As a result, the light emitted from the output end of the optical fiber 203 with a predetermined NA is incident on the lens 224, shaped into collimated light, and emitted.

Fig. 23 shows a configuration example of the connector 301 and the light-receiving portion 302 in the receiver 300. This configuration example is an example, and the configuration of the receiver 300 is not limited to this.

The connector 301 has a connector main body 311. The connector main body 311 is made of, for example, a light-transmissive material such as a synthetic resin or glass, or a material such as silicon that transmits a specific wavelength, and is configured as a ferrule with a lens.

By configuring the connector main body 311 as a ferrule with a lens in this way, it is possible to easily achieve the optical axis alignment between the optical fiber and the lens. Since the connector main body 311 is configured as a ferrule with a lens in this way, multi-channel communication can be easily realized by simply inserting an optical fiber into the ferrule even in the case of multi-channel.

The connector main body 311 has a concave light incident portion (light transmission space) 313 formed on the front side thereof. A lens (convex lens) 314 is formed integrally with the connector main body 311 so as to be positioned at the bottom of the light incident portion 313.

Further, an optical fiber insertion hole 316 extending forward from the back side is provided in the connector main body 311 so as to be aligned with the lens 314. The optical fiber 303 has a double structure including a central core 303a serving as an optical path and a cladding 303b surrounding the core 303a.

The optical fiber insertion hole 316 is shaped so that the optical axis of the lens 314 is aligned with the core 303a of the optical fiber 303 inserted therein. The optical fiber insertion hole 316 is shaped so that its bottom position, that is, the contact position of the tip (incident end) when the optical fiber 303 is inserted, coincides with the focal position of the lens 314.

Further, an adhesive injection hole 312 extending downward from the upper surface side is formed in the connector main body 311 so as to communicate with the vicinity of the bottom position of the optical fiber insertion hole 316. After the optical fiber 303 is inserted into the optical fiber insertion hole 316, an adhesive 317 is injected around the optical fiber 303 from the adhesive injection hole 312, whereby the optical fiber 303 is fixed to the connector main body 311.

In the connector 301, the lens 314 has a function of condensing incident collimated light. In this case, the collimated light is incident on the lens 314 and condensed, and this condensed light is incident on the incident end of the optical fiber 303 with a predetermined NA.

Further, the light-receiving portion 302 has a ferrule 321. The ferrule 321 is made of a light-transmissive material such as a synthetic resin or glass, or a material such as silicon that transmits a specific wavelength.

The ferrule 321 is provided with an optical fiber insertion hole 326 extending rearward from the front side. The optical fiber 303 is fixed to the ferrule 321 with an adhesive 327 after being inserted into the optical fiber insertion hole 326. The ferrule 321 is formed with an arrangement hole 324 extending upward from the lower surface side.

A substrate 322 on which a light-receiving element 323 and a processor 328 are mounted is fixed to the lower surface side of the ferrule 321. The position of the substrate 322 is adjusted and fixed so that the incident portion of the light-receiving element 323 is aligned with the optical axis of the optical fiber 303.

Further, in order to change the optical path of light from the optical fiber 303 to the direction of the light-receiving element 323, the bottom portion of the arrangement hole 324 is formed as an inclined surface, and a mirror (optical path changing portion) 325 is arranged on this inclined surface. Regarding the mirror 325, it is conceivable not only to fix the mirror 325 which is separately produced to the inclined surface, but also to form the mirror 325 on the inclined surface by vapor deposition or the like.

Fig. 24 shows a configuration example of the connectors 402 and 403 in the cable 400. This configuration example is an example, and the configuration of the cable 400 is not limited to this.

The connector 402 has a connector main body 421. The connector main body 421 is made of a light-transmissive material such as a synthetic resin or glass, or a material such as silicon that transmits a specific wavelength, and is configured as a ferrule with a lens.

By configuring the connector main body 421 as a ferrule with a lens in this way, it is possible to easily achieve the optical axis alignment between the optical fiber and the lens. Since the connector main body 421 is configured as a ferrule with a lens in this way, multi-channel communication can be easily realized by simply inserting an optical fiber into the ferrule even in the case of multi-channel.

The connector main body 421 has a concave light incident portion (light transmission space) 423 formed on the front side thereof. A lens (convex lens) 424 is formed integrally with the connector main body 421 so as to be positioned at the bottom of the light incident portion 423.

In addition, an optical fiber insertion hole 426 extending forward from the rear side is provided in the connector main body 421 so as to be aligned with the lens 424. The optical fiber 401 has a double structure including a central core 401a serving as an optical path and a cladding 401b surrounding the core 401a.

The optical fiber insertion hole 426 is formed so that the optical axis of the lens 424 is aligned with the core 401a of the optical fiber 401 inserted therein. The optical fiber insertion hole 426 is shaped so that its bottom position, that is, the contact position of the tip (incident end) when the optical fiber 401 is inserted, coincides with the focal position of the lens 424.

Further, an adhesive injection hole 422 extending downward from the upper surface side is formed in the connector main body 421 so as to communicate with the vicinity of the bottom position of the optical fiber insertion hole 426. After the optical fiber 401 is inserted into the optical fiber insertion hole 426, an adhesive 427 is injected around the optical fiber 401 from the adhesive injection hole 422, whereby the optical fiber 401 is fixed to the connector main body 421.

In the connector 402, the lens 424 has a function of condensing incident collimated light. In this case, the collimated light is incident on the lens 424 and condensed, and this condensed light is incident on the incident end of the optical fiber 401 with a predetermined NA.

The connector 403 has a connector main body 431. The connector main body 431 is made of a light-transmissive material such as a synthetic resin or glass, or a material such as silicon that transmits a specific wavelength, and is configured as a ferrule with a lens.

By configuring the connector main body 431 as a ferrule with a lens in this way, it is possible to easily achieve the optical axis alignment between the optical fiber and the lens. Since the connector main body 431 is configured as a ferrule with a lens in this way, multi-channel communication can be easily realized by simply inserting an optical fiber into the ferrule even in the case of multi-channel.

The connector main body 431 has a concave light-emitting portion (light transmission space) 433 formed on the front side thereof. A lens (convex lens) 434 is formed integrally with the connector main body 431 so as to be positioned at the bottom of the light-emitting portion 433.

In addition, an optical fiber insertion hole 436 extending forward from the rear side is provided in the connector main body 431 so as to be aligned with the lens 434.

The optical fiber insertion hole 436 is shaped so that the optical axis of the lens 434 is aligned with the core 401a of the optical fiber 401 inserted therein. The optical fiber insertion hole 436 is formed so that its bottom position, that is, the contact position of the tip (incident end) when the optical fiber 401 is inserted, coincides with the focal position of the lens 434.

Further, an adhesive injection hole 432 extending downward from the upper surface side is formed in the connector main body 431 so as to communicate with the vicinity of the bottom position of the optical fiber insertion hole 436. After the optical fiber 401 is inserted into the optical fiber insertion hole 436, an adhesive 437 is injected around the optical fiber 401 from the adhesive injection hole 432, whereby the optical fiber 401 is fixed to the connector main body 431.

In the connector 403, the lens 434 has a function of shaping the light emitted from the optical fiber 401 into collimated light and emitting the collimated light. As a result, the light emitted from the output end of the optical fiber 401 with a predetermined NA is incident on the lens 434, shaped into collimated light, and emitted.

In the transmission/reception system 100 shown in Fig. 21, the optical fibers 203, 303, and 401 are configured to propagate only the fundamental mode at a first wavelength (for example, 1310 nm) and propagate at least the first-order mode as well as the fundamental mode at a second wavelength (for example, 850 nm), and communication is performed using light of the second wavelength. Therefore, since at least the first-order mode component generated due to optical axis misalignment propagates together with the fundamental mode component, it is possible to reduce the coupling loss of optical power due to optical axis misalignment.

In the transmission/reception system 100 shown in Fig. 21, the optical fibers 203, 303, and 401 are configured such that a refractive index distribution of the core and the cladding is controlled so that an inter-mode propagation delay difference is within a predetermined threshold, for example, the inter-mode propagation delay difference is zero, when communication is performed using light of the second wavelength. Therefore, since the inter-mode propagation delay difference is within a predetermined threshold when communication is performed using light of the second wavelength, high-quality signal transmission can be realized without increasing the cost and power consumption due to the provision of a waveform distortion correction circuit.

Fig. 25 shows a configuration example of a transmission/reception system 100A. In Fig. 25, the parts corresponding to those in Fig. 21 are designated by the same reference signs, and detailed descriptions thereof will be omitted as appropriate. This transmission/reception system 100A has a so-called pigtail-type transmitter in which a transmitter 200 and a cable 400 are integrally formed. In this case, the transmitting side of the cable 400 is fixedly connected to the transmitter 200, and the light emitted by the light-emitting portion 201 is directly incident on the optical fiber 401 of the cable 400. Others of this transmission/reception system 100A are configured in the same manner as the transmission/reception system 100 of Fig. 21.

In the transmission/reception system 100A, the optical fiber of the present technology is applied to the optical fiber 401 of the cable 400 and the optical fiber 303 of the receiver 300. That is, these optical fibers are configured to propagate only the fundamental mode at a first wavelength and propagate at least the first-order mode as well as the fundamental mode at a second wavelength.

In addition, the optical fibers are configured such that a refractive index distribution of the core and the cladding is controlled so that an inter-mode propagation delay difference is within a predetermined threshold, for example, the inter-mode propagation delay difference is zero, when communication is performed using light of the second wavelength (see Figs. 13(b) to 13(e)). In this transmission/reception system 100A, communication is performed using light of the second wavelength.

In other words, communication is performed under double-mode conditions, for example, that a combination of an 850-nm light source and a 1310-nm fiber (whose refractive index distribution of the core and cladding is controlled so that the inter-mode propagation delay difference is zero) is applied.

Fig. 26 shows a configuration example of the light-emitting portion 201 in the transmitter 200 and the connector 403 in the cable 400. The light-emitting portion 201 is the same as that described above with reference to Fig. 22, so description thereof will be omitted. Also, the connector 403 is the same as that described above with reference to Fig. 24, so description thereof will be omitted.

The transmission/reception system 100A shown in Fig. 25 can also obtain the same effects as the transmission/reception system 100 shown in Fig. 21.

<2. Modification example>

In the above-described embodiment, the present technology has been described with an example in which the refractive index distribution of the core and the cladding is controlled so that the inter-mode propagation delay difference is zero, but the inter-mode propagation delay difference is not necessarily zero. It is also conceivable to control the refractive index distribution of the core and the cladding so that the inter-mode propagation delay difference is within a predetermined threshold determined according to distance, transmission rate, and the like.

In the above-described embodiments, the segmented-core type, stepped-type, W-type, and SI-type are shown as the types of the refractive index distribution of the core and the cladding, but the types are not limited thereto, and the refractive index distribution may be realized in other types. Parameters such as the values of the first diameter a, the second diameter b, and the third diameter c are not limited to those mentioned in the above embodiment.

In the above-described embodiment, although the first wavelength is described as 1310 nm, since a laser light source or an LED light source can be used as the light source, the first wavelength can be set between 300 nm and 5 pm, for example.

In the above-described embodiment, although the first wavelength is described as 1310 nm, it is also conceivable that the first wavelength is a wavelength in the 1310-nm band including 1310 nm. In the above-described embodiment, although the first wavelength is described as 1310 nm, it is also conceivable that the first wavelength is 1550 nm or a wavelength in the 1550-nm band including 1550 nm. In the above-described embodiment, although the second wavelength is described as 850 nm, it is also conceivable that the second wavelength is a wavelength in the 850-nm band including 850 nm.

Further, in the above embodiments, an example in which the optical waveguide is an optical fiber has been described, but the present technology can naturally be similarly applied to an optical waveguide other than optical fiber, such as a silicon optical waveguide.

Although the preferred embodiments of the present disclosure have been described in detail with reference to the accompanying figures as described above, the technical scope of the present disclosure is not limited to such examples. It is apparent that those having ordinary knowledge in the technical field of the present disclosure could conceive various modification examples or revisions within the scope of the technical ideas set forth in the claims, and it should be understood that these also naturally fall within the technical scope of the present disclosure.

Further, the effects described in the present specification are merely explanatory or exemplary and are not intended as limiting. In other words, the technologies according to the present disclosure may exhibit other effects apparent to those skilled in the art from the description herein, in addition to or in place of the above effects.

Note that the present technology can also have the following configurations.

(1) An optical waveguide configured to: propagate only a fundamental mode at a first wavelength; propagate at least a first-order mode as well as the fundamental mode at a second wavelength; and a refractive index distribution of a core and a cladding is controlled so that an inter-mode propagation delay difference is within a predetermined threshold when communication is performed using light of the second wavelength.

(2) The optical waveguide according to (1), wherein the refractive index distribution includes a distribution of refractive indices of a first region from a center to a first diameter, a second region to a second diameter outside the first region, a third region to a third diameter outside the second region, and a fourth region outside the third region.

(3) The optical waveguide according to (2), wherein the refractive index of the third region is higher than that of the fourth region, the refractive index of the second region is equal to that of the fourth region, and the refractive index of the first region is higher than that of the third region.

(4) The optical waveguide according to (3), wherein the first wavelength is in a 1310-nm band and the second wavelength is in an 850-nm band, the first diameter is 7 pm, the second diameter is 9 pm, the third diameter is 11 pm, the refractive index of the fourth region is 1.4524, a refractive index change amount of the third region with respect to the refractive index of the fourth region is in a range of 0 to +0.0024, and a refractive index change amount of the first region with respect to the refractive index of the fourth region is in a range of +0.00467 to +0.00541.

(5) The optical waveguide according to (4), wherein a refractive index change amount of the third region with respect to the refractive index of the fourth region is +0.000827, and a refractive index change amount of the first region with respect to the refractive index of the fourth region is +0.004882.

(6) The optical waveguide according to (2), wherein the refractive index of the third region is equal to that of the fourth region, the refractive index of the second region is higher than that of the fourth region, and the refractive index of the first region is higher than that of the second region.

(7) The optical waveguide according to (6), wherein the first wavelength is in a 1310-nm band and the second wavelength is in an 850-nm band, the first diameter is 7 pm and the second diameter is 13 pm, the refractive index of the fourth region is 1.4524, a refractive index change amount of the second region with respect to the refractive index of the fourth region is in a range of 0 to +0.0012, and a refractive index change amount of the first region with respect to the refractive index of the fourth region is in a range of +0.00467 to +0.00526.

(8) The optical waveguide according to (7), wherein a refractive index change amount of the second region with respect to the refractive index of the fourth region is +0.000811, and a refractive index change amount of the first region with respect to the refractive index of the fourth region is +0.005053.

(9) The optical waveguide according to (2), wherein the refractive index of the third region is equal to that of the fourth region, the refractive index of the second region is lower than that of the fourth region, and the refractive index of the first region is higher than that of the fourth region.

(10) The optical waveguide according to (9), wherein the first wavelength is in a 1310-nm band and the second wavelength is in an 850-nm band, the first diameter is 7 pm and the second diameter is 9 pm, the refractive index of the fourth region is 1.4524, a refractive index change amount of the first region with respect to the refractive index of the fourth region is in a range of -0.0055 to 0, and a refractive index change amount of the first region with respect to the refractive index of the fourth region is in a range of +0.00486 to +0.00467.

(11) The optical waveguide according to (10), wherein a refractive index change amount of the first region with respect to the refractive index of the fourth region is -0.002245, and a refractive index change amount of the first region with respect to the refractive index of the fourth region is +0.004778.

(12) The optical waveguide according to (2), wherein the refractive indices of the third region and the second region are equal to that of the fourth region, and the refractive index of the first region is higher than that of the fourth region.

(13) The optical waveguide according to (12), wherein the first wavelength is in a 1310-nm band and the second wavelength is in an 850-nm band, the first diameter is 7 pm, the refractive index of the fourth region is 1.4524, and a refractive index change amount of the first region with respect to the refractive index of the fourth region is +0.00467.

(14) The optical waveguide according to (1), wherein the first wavelength is a wavelength at which chromatic dispersion is zero.

(15) The optical waveguide according to (1) or (14), wherein the first wavelength is between 300 nm and 5 pm.

(16) The optical waveguide according to (15), wherein the first wavelength is a wavelength in a 1310-nm band or a 1550-nm band.

(17) The optical waveguide according to (1) or (2), wherein the second wavelength is a wavelength in an 850-nm band.

(18) An optical communication device comprising: an optical waveguide configured to propagate only a fundamental mode at a first wavelength and propagate at least a first-order mode as well as the fundamental mode at a second wavelength, the optical waveguide is configured such that a refractive index distribution of a core and a cladding is controlled so that an inter-mode propagation delay difference is within a predetermined threshold when communication is performed using light of the second wavelength, and the optical communication device performs communication using light of the second wavelength.

(19) An optical communication method for performing communication using light of a second wavelength in an optical waveguide configured to propagate only a fundamental mode at a first wavelength and propagate at least a first-order mode as well as the fundamental mode at the second wavelength and configured such that a refractive index distribution of a core and a cladding is controlled so that an inter-mode propagation delay difference is within a predetermined threshold when communication is performed using light of the second wavelength.

(20) An optical communication system in which a transmitter and a receiver are connected by an optical waveguide, wherein the optical waveguide is configured to propagate only a fundamental mode at a first wavelength and propagate at least a first-order mode as well as the fundamental mode at a second wavelength and configured such that a refractive index distribution of a core and a cladding is controlled so that an inter-mode propagation delay difference is within a predetermined threshold when communication is performed using light of the second wavelength, and the transmitter and the receiver perform communication using light of the second wavelength in the optical waveguide.

[Reference Signs List]

10T, 10R Optical fiber
10a Core
10b Cladding
11T, 11R Lens
100, 100A Transmission/reception system
200 Transmitter
201 Light-emitting portion
202 Connector (receptacle)
203 Optical fiber
203a Core
203b Cladding
221 Connector main body
222 Adhesive injection hole
223 Light exit portion (light transmission space)
224 Lens (convex lens)
226 Optical fiber insertion hole
227 Adhesive
211 Ferrule
212 Substrate
213 Light-emitting element
214 Arrangement hole
215 Mirror
216 Optical fiber insertion hole
217 Adhesive
218 Light-emitting element driver
300 Receiver
301 Connector (receptacle)
302 Light-receiving portion
303 Optical fiber
303a Core
303b Cladding
311 Connector main body
312 Adhesive injection hole
313 Light incident portion (light transmission space)
314 Lens (convex lens)
316 Optical fiber insertion hole
317 Adhesive
321 Ferrule
322 Substrate
323 Light-receiving element

324 Arrangement hole
325 Mirror
326 Optical fiber insertion hole
327 Adhesive
328 Processor
400 Cable
401 Optical fiber
401a Core
401b Cladding
402, 403 Connector (plug)
421 Connector main body
422 Adhesive injection hole
423 Light incident portion (light transmission space)
424 Lens (convex lens)
426 Optical fiber insertion hole
427 Adhesive
431 Connector main body
432 Adhesive injection hole
433 Light emitting portion (light transmission space)
434 Lens (convex lens)
436 Optical fiber insertion hole
437 Adhesive

**Claims**

1. An optical waveguide configured to:

   propagate only a fundamental mode at a first wavelength;
   propagate at least a first-order mode as well as the fundamental mode at a second wavelength; and
   a refractive index distribution of a core and a cladding is controlled so that an inter-mode propagation delay difference is within a predetermined threshold when communication is performed using light of the second wavelength.

2. The optical waveguide according to claim 1, wherein the refractive index distribution includes a distribution of refractive indices of a first region from a center to a first diameter, a second region to a second diameter outside the first region, a third region to a third diameter outside the second region, and a fourth region outside the third region.

3. The optical waveguide according to claim 2, wherein

   the refractive index of the third region is higher than that of the fourth region,
   the refractive index of the second region is equal to that of the fourth region, and
   the refractive index of the first region is higher than that of the third region.

4. The optical waveguide according to claim 3, wherein

the first wavelength is in a 1310-nm band and the second wavelength is in an 850-nm band,
the first diameter is 7 pm, the second diameter is 9 pm, the third diameter is 11 $\mu$m,
the refractive index of the fourth region is 1.4524,
a refractive index change amount of the third region with respect to the refractive index of the fourth region is in a range of 0 to +0.0024, and
a refractive index change amount of the first region with respect to the refractive index of the fourth region is in a range of +0.00467 to +0.00541.

5. The optical waveguide according to claim 4, wherein

   a refractive index change amount of the third region with respect to the refractive index of the fourth region is +0.000827, and
   a refractive index change amount of the first region with respect to the refractive index of the fourth region is +0.004882.

6. The optical waveguide according to claim 2, wherein the refractive index of the third region is equal to that of the fourth region, the refractive index of the second region is higher than that of the fourth region, and the refractive index of the first region is higher than that of the second region.

7. The optical waveguide according to claim 6, wherein

   the first wavelength is in a 1310-nm band and the second wavelength is in an 850-nm band,
   the first diameter is 7 pm and the second diameter is 13 pm,
   the refractive index of the fourth region is 1.4524,
   a refractive index change amount of the second region with respect to the refractive index of the fourth region is in a range of 0 to +0.0012, and
   a refractive index change amount of the first region with respect to the refractive index of the fourth region is in a range of +0.00467 to +0.00526.

8. The optical waveguide according to claim 7, wherein

   a refractive index change amount of the second region with respect to the refractive index of the fourth region is +0.000811, and
   a refractive index change amount of the first region with respect to the refractive index of the fourth region is +0.005053.

9. The optical waveguide according to claim 2, wherein

   the refractive index of the third region is equal to that of the fourth region, the refractive index of the second region is lower than that of the fourth region, and
the refractive index of the first region is higher than that of the fourth region.

10. The optical waveguide according to claim 9, wherein

the first wavelength is in a 1310-nm band and the second wavelength is in an 850-nm band,
the first diameter is 7 pm and the second diameter is 9 pm,
the refractive index of the fourth region is 1.4524,
a refractive index change amount of the first region with respect to the refractive index of the fourth region is in a range of -0.0055 to 0, and
a refractive index change amount of the first region with respect to the refractive index of the fourth region is in a range of +0.00486 to +0.00467.

11. The optical waveguide according to claim 10, wherein

a refractive index change amount of the first region with respect to the refractive index of the fourth region is -0.002245, and
a refractive index change amount of the first region with respect to the refractive index of the fourth region is +0.004778.

12. The optical waveguide according to claim 2, wherein
the refractive indices of the third region and the second region are equal to that of the fourth region, and
the refractive index of the first region is higher than that of the fourth region.

13. The optical waveguide according to claim 12, wherein

the first wavelength is in a 1310-nm band and the second wavelength is in an 850-nm band,
the first diameter is 7 pm,
the refractive index of the fourth region is 1.4524, and
a refractive index change amount of the first region with respect to the refractive index of the fourth region is +0.00467.

14. The optical waveguide according to claim 1, wherein
the first wavelength is a wavelength at which chromatic dispersion is zero.

15. The optical waveguide according to claim 1, wherein
the first wavelength is between 300 nm and 5 pm.

16. The optical waveguide according to claim 15, wherein
the first wavelength is a wavelength in a 1310-nm band or a 1550-nm band.

17. The optical waveguide according to claim 1, wherein
the second wavelength is a wavelength in an 850-nm band.

18. An optical communication device comprising:

an optical waveguide configured to propagate only a fundamental mode at a first wavelength and propagate at least a first-order mode as well as the fundamental mode at a second wavelength, wherein
the optical waveguide is configured such that a refractive index distribution of a core and a cladding is controlled so that an inter-mode propagation delay difference is within a predetermined threshold when communication is performed using light of the second wavelength, and
the optical communication device performs communication using light of the second wavelength.

19. An optical communication method for performing communication using light of a second wavelength in an optical waveguide configured to propagate only a fundamental mode at a first wavelength and propagate at least a first-order mode as well as the fundamental mode at the second wavelength and configured such that a refractive index distribution of a core and a cladding is controlled so that an inter-mode propagation delay difference is within a predetermined threshold when communication is performed using light of the second wavelength.

20. An optical communication system in which a transmitter and a receiver are connected by an optical waveguide, wherein

the optical waveguide is configured to propagate only a fundamental mode at a first wavelength and propagate at least a first-order mode as well as the fundamental mode at a second wavelength and configured such that a refractive index distribution of a core and a cladding is controlled so that an inter-mode propagation delay difference is within a predetermined threshold when communication is performed using light of the second wavelength, and
the transmitter and the receiver perform communication using light of the second wavelength in the optical waveguide.

Fig. 1

Fig. 2

(b)

$$b = ((\beta/k)^2 - n_2^2)/(n_1^2 - n_2^2)$$

(a)

| CLADDING | $n_2$ |
|----------|-------|
| CORE | $n_1$ |

$LP_{01}$  FUNDAMENTAL MODE
$LP_{11}$  FIRST-ORDER MODE
$LP_{21}$  SECOND-ORDER MODE
$LP_{02}$
$LP_{31}$
$LP_{12}$
$LP_{41}$
$LP_{22}$
$LP_{03}$
$LP_{51}$
$LP_{32}$
$LP_{61}$
$LP_{13}$
$LP_{42}$

$V = \pi d \mathrm{NA}/\lambda$

$V = 2.405$

Fig. 3

(a)

PROPAGATING LIGHT WAVELENGTH : 1310nm

CORE DIAMETER : 8um

NA : 0.1

(b)

$b = ((\beta/k)^2 - n_2^2)/(n_1^2 - n_2^2)$

$V = \pi d NA / \lambda$

$V = 1.92$

EP 4 283 886 A1

Fig. 4

20

Fig. 5

## Fig. 6

(a)

PROPAGATING LIGHT WAVELENGTH : 850nm
CORE DIAMETER : 8um
NA : 0.1

CLADDING

CORE

FUNDAMENTAL MODE + FIRST-ORDER MODE

(b)

$b = ((\beta/k)^2 - n_2^2)/(n_1^2 - n_2^2)$

$V = \pi d NA/\lambda$

$V = 2.96$

$LP_{01}$, $LP_{11}$, $LP_{21}$, $LP_{02}$, $LP_{31}$, $LP_{12}$, $LP_{41}$, $LP_{22}$, $LP_{03}$, $LP_{51}$, $LP_{32}$, $LP_{61}$, $LP_{13}$, $LP_{42}$

Fig. 7

(a)

$Z = 1.476\text{mm}$

$R = 566\text{um}$  $D = 1.458\text{mm}$

(b)

OPTICAL AXIS
MISALIGNMENT

CLADDING

INPUT LIGHT ⟶  CORE

CORE DIAMETER : 8um
NA : 0.1

Fig. 8

Fig. 9

(a) INPUT LIGHT ⟶ CLADDING / CORE

FUNDAMENTAL
MODE

(b) INPUT LIGHT ⟶ CLADDING / CORE

FUNDAMENTAL   FIRST-ORDER
ODE                MODE

+

Fig. 10

CASE OF LIGHT WAVELENGTH 850 nm

Fig. 11

850nm
LIGHT SOURCE    1310nm FIBER

→ OUTPUT LIGHT

ZEROTH-ORDER                    ZEROTH-ORDER

FIRST-ORDER                     FIRST-ORDER

ZEROTH-ORDER +
FIRST-ORDER

ZEROTH-ORDER
COMPONENT

FIRST-ORDER
COMPONENT

0    1    0                     0    1    0

Fig. 12

Fig. 13

Fig. 14

SEGMENTED-CORE TYPE

Fig. 15

STEPPED-TYPE

INTER-MODE PROPAGATION DELAY DIFFERENCE [ps/km]

WAVELENGTH [μm]

Fig. 16

EP 4 283 886 A1

Fig.17

Fig. 18

Fig. 19

Fig. 20

Fig. 21

Fig. 22

Fig. 23

Fig. 24

LIGHT WAVELENGTH : 850nm

1310nm FIBER

Fig. 25

Fig. 26

LIGHT WAVELENGTH:850nm

1310nm FIBER

## INTERNATIONAL SEARCH REPORT

| International application No. |
| --- |
| **PCT/JP2021/046618** |

| A. | CLASSIFICATION OF SUBJECT MATTER |
| --- | --- |

*H04B 10/2507*(2013.01)i; *G02B 6/036*(2006.01)i
FI:  G02B6/036; H04B10/2507

According to International Patent Classification (IPC) or to both national classification and IPC

| B. | FIELDS SEARCHED |
| --- | --- |

Minimum documentation searched (classification system followed by classification symbols)

G02B6/02-6/10; G02B6/44; H04B10/00-10/90; H04J14/00-14/08

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

Scopus

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2004-508600 A (PIRELLI S.P.A) 18 March 2004 (2004-03-18) | 1-2, 12-20 |
|  | paragraphs [0051]-[0060], [0091]-[0098], [0105]-[0118], tables 1-7, fig. 11, 15-17 | |
| Y | | 3-11 |
| Y | JP 1-163707 A (CORNING GLASS WORKS) 28 June 1989 (1989-06-28) | 3-11 |
|  | p. 6, lower right column, line 13 to p. 9, upper left column, line 15, fig. 5-8, 10 | |
| A | US 2010/0098431 A1 (DONLAGIC, Denis) 22 April 2010 (2010-04-22) | 1-20 |
|  | entire text, all drawings | |
| A | JP 2013-511749 A (CORNING INCORPORATED) 04 April 2013 (2013-04-04) | 1-20 |
|  | entire text, all drawings | |
| A | WO 2019/009284 A1 (NIPPON TELEGRAPH & TELEPHONE) 10 January 2019 (2019-01-10) | 1-20 |
|  | entire text, all drawings | |
| A | JP 2020-530586 A (CORNING INCORPORATED) 22 October 2020 (2020-10-22) | 1-20 |
|  | entire text, all drawings | |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **31 January 2022** | **08 February 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

## INTERNATIONAL SEARCH REPORT

International application No.

**PCT/JP2021/046618**

### C. DOCUMENTS CONSIDERED TO BE RELEVANT

| Category* | Citation of document, with indication, where appropriate, of the relevant passages | Relevant to claim No. |
|---|---|---|
| A | CN 111381314 A (YANGTZE OPTICAL FIBRE AND CABLE JOINT STOCK LIMITED COMPANY) 07 July 2020 (2020-07-07)<br>    entire text, all drawings | 1-20 |
| A | US 2006/0045451 A1 (3M INNOVATIVE PROPERTIES COMPANY) 02 March 2006 (2006-03-02)<br>    entire text, all drawings | 1-20 |
| A | JP 2019-530015 A (CORNING INCORPORATED) 17 October 2019 (2019-10-17)<br>    entire text, all drawings | 1-20 |
| A | SEVILA, Pau Medina. Transmission Over SSMF at 850 nm: Bimodal Propagation and Equalization. Journal of Lightwave Technology. 01 October 2017, vol. 35, no. 19, pp. 4125-4136<br>    entire text, all drawings | 1-20 |

Form PCT/ISA/210 (second sheet) (January 2015)

## INTERNATIONAL SEARCH REPORT
### Information on patent family members

| International application No. |
| --- |
| **PCT/JP2021/046618** |

| Patent document cited in search report | | | Publication date (day/month/year) | Patent family member(s) | | | Publication date (day/month/year) |
| --- | --- | --- | --- | --- | --- | --- | --- |
| JP | 2004-508600 | A | 18 March 2004 | US | 2004/0033039 | A1 | |
| | | | | paragraphs [0068]-[0083], [0143]-[0154], [0164]-[0183], tables 1-7, fig. 11, 15-17 | | | |
| | | | | WO | 2002/021731 | A2 | |
| | | | | EP | 1338102 | A2 | |
| | | | | CN | 1455881 | A | |
| | | | | KR | 10-0769268 | B1 | |
| JP | 1-163707 | A | 28 June 1989 | US | 4877304 | A | |
| | | | | column 5, line 36 to column 8, line 31, fig. 5-8, 10 | | | |
| | | | | EP | 307228 | A2 | |
| | | | | KR | 10-1989-0005541 | A | |
| US | 2010/0098431 | A1 | 22 April 2010 | WO | 2006/010798 | A1 | |
| JP | 2013-511749 | A | 04 April 2013 | US | 2011/0122646 | A1 | |
| | | | | EP | 2502101 | A1 | |
| | | | | CN | 102667551 | A | |
| | | | | WO | 2011/063214 | A1 | |
| WO | 2019/009284 | A1 | 10 January 2019 | US | 2020/0116925 | A1 | |
| | | | | EP | 3627197 | A1 | |
| | | | | CN | 110741293 | A | |
| JP | 2020-530586 | A | 22 October 2020 | US | 2019/0049660 | A1 | |
| | | | | WO | 2019/032408 | A1 | |
| | | | | EP | 3441807 | A1 | |
| | | | | CN | 111033334 | A | |
| CN | 111381314 | A | 07 July 2020 | (Family: none) | | | |
| US | 2006/0045451 | A1 | 02 March 2006 | WO | 2006/026664 | A1 | |
| JP | 2019-530015 | A | 17 October 2019 | US | 2018/0095219 | A1 | |
| | | | | WO | 2018/063913 | A1 | |
| | | | | EP | 3519870 | A1 | |
| | | | | CN | 109863436 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017056889 A